(19) Europäisches Patentamt
European Patent Office
Office européen des brevets

(11) EP 4 667 516 A1

(12) **EUROPEAN PATENT APPLICATION**
published in accordance with Art. 153(4) EPC

(43) Date of publication:
**24.12.2025 Bulletin 2025/52**

(21) Application number: **24756642.5**

(22) Date of filing: **30.01.2024**

(51) International Patent Classification (IPC):
***C08J 9/16** (2006.01)*

(52) Cooperative Patent Classification (CPC):
**C08J 9/16**

(86) International application number:
**PCT/JP2024/002833**

(87) International publication number:
**WO 2024/171791 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 JP 2023020859**

(71) Applicant: **JSP Corporation**
**Tokyo 100-0005 (JP)**

(72) Inventor: **SUENAGA Katsuyuki**
**Yokkaichi-shi Mie 510-0881 (JP)**

(74) Representative: **KBN IP Patentanwälte Partnerschaft mbB**
**Siegfried-Leopold-Straße 27**
**53225 Bonn (DE)**

# (54) POLYAMIDE-BASED RESIN FOAMED PARTICLES AND POLYAMIDE-BASED RESIN FOAMED PARTICLE MOLDED BODY

(57) Polyamide-based resin expanded beads are provided that are capable of providing a molded article of expanded beads that exhibits good in-mold moldability and excellent flame retardancy, and a molded article of polyamide-based resin expanded beads is provided that is excellent in moldability and flame retardancy.

The polyamide-based resin expanded beads include a polyamide-based resin, a specific flame retardant a, and a specific flame retardant b so that the total of the amount of the flame retardant a blended and the amount of the flame retardant b blended is 10 parts by mass or more and 30 parts by mass or less with respect to 100 parts by mass of a base material resin containing the polyamide-based resin, the mass ratio of the amount of the flame retardant a blended to the amount of the flame retardant b blended is 90 : 10 to 30 : 70 (wherein the total of the flame retardant a and the flame retardant b is 100 mass%), an average cell diameter A of the polyamide-based resin expanded beads is 5 μm or more and 100 μm or less, and an average cell diameter B of 5 cells 250 μm or less wherein the 5 cells are selected from cells observed in a cut surface formed by bisecting the polyamide-based resin expanded beads, in descending order of the area per cell. The molded article of polyamide-based resin expanded beads is obtained by in-mold molding of the polyamide-based resin expanded beads.

EP 4 667 516 A1

## Description

### Technical Field

The present disclosure relates to polyamide-based resin expanded beads containing a flame retardant and a molded article of polyamide-based resin expanded beads that is obtained by in-mold molding of the polyamide-based resin expanded beads and has excellent flame retardancy.

### Background Art

Polyamide-based resins are known as resins having high heat resistance among general resin materials and also being excellent in abrasion resistance, chemical resistance, and the like. Expanded molded articles obtained by expanding the polyamide-based resins can be lighter while the excellent properties are maintained. Therefore, polyamide-based resin expanded molded articles are expected to be developed for use in automobile parts and the like. A molded article of polyamide-based resin expanded beads that is obtained by in-mold molding of polyamide-based resin expanded beads is particularly expected to be used, as a heat insulating material and a member having excellent sound insulation, in an engine hood and an engine cover in a vehicle.

In various uses in, for example, automobile parts described above, a molded article of polyamide-based resin expanded beads may be required to have excellent flame retardancy.

For example, Patent Literature 1 describes that polyamide-based resin expanded beads can contain various flame retardants.

### Citation List

### Patent Literature

Patent Literature 1: WO2016/001109

### Summary of Invention

### Technical Problem

However, Patent Literature 1 does not specifically examine polyamide-based resin expanded beads containing a flame retardant, and does not at all specifically disclose a molded article of polyamide-based resin expanded beads that has improved flame retardancy.

The present invention has been made in view of the above problem. The present invention provides polyamide-based resin expanded beads capable of providing a molded article of expanded beads that exhibits good in-mold moldability and excellent flame retardancy, and provides a molded article of polyamide-based resin expanded beads that is excellent in flame retardancy.

### Solution to Problem

The polyamide-based resin expanded beads of the present invention include a flame retardant, the flame retardant contains: one or more flame retardants (flame retardant a) selected from the group consisting of metal salts of phosphinic acid, metal salts of diphosphinic acid, and mixtures of the metal salts of phosphinic acid and the metal salts of diphosphinic acid; and one or more flame retardants (flame retardant b) selected from the group consisting of reaction products of melamine and polyphosphoric acid, reaction products of melamine condensation products and polyphosphoric acid, and mixtures of the reaction products of melamine and polyphosphoric acid and the reaction products of melamine condensation products and polyphosphoric acid, the polyamide-based resin expanded beads include a base material resin containing a polyamide-based resin, a total of an amount of the flame retardant a blended and an amount of the flame retardant b blended is 10 parts by mass or more and 30 parts by mass or less with respect to 100 parts by mass of the base material resin, a mass ratio of the amount of flame retardant a blended to the amount of the flame retardant b blended is 90 : 10 to 30 : 70 (wherein a total of the flame retardant a and the flame retardant b is 100 mass%), an average cell diameter A of the polyamide-based resin expanded beads is 5 μm or more and 100 μm or less, and an average cell diameter B of 5 cells is 250 μm or less, the 5 cells are selected from cells observed in a cut surface formed by bisecting the polyamide-based resin expanded beads, in descending order of an area per cell.

The molded article of polyamide-based resin expanded beads of the present invention is obtained by in-mold molding of the polyamide-based resin expanded beads of the present invention.

## Advantageous Effects of Invention

The present invention can provide polyamide-based resin expanded beads capable of providing a molded article of expanded beads that exhibits good in-mold moldability and excellent flame retardancy, and provide a molded article of polyamide-based resin expanded beads that is excellent in flame retardancy.

## Brief Description of Drawing

Fig. 1 is a DSC curve obtained in accordance with the testing methods for heat of transitions of plastics described in JIS K7122: 1987, for determination of a total heat of fusion and a heat of fusion at a high-temperature peak of polyamide-based resin expanded beads according to an embodiment of the present invention.

## Description of Embodiments

Hereinafter, the polyamide-based resin expanded beads of the present invention (hereinafter, sometimes simply referred to as expanded beads) and the molded article of polyamide-based resin expanded beads of the present invention (hereinafter, sometimes simply referred to as molded article of expanded beads, or molded article) will be described.

The expanded beads are polyamide-based resin expanded beads including a flame retardant and a polyamide-based resin. The flame retardant contains a flame retardant a and a flame retardant b.

The flame retardant a is one or more phosphorus-based flame retardants selected from the group consisting of metal salts of phosphinic acid, metal salts of diphosphinic acid, and mixtures thereof. The flame retardant b is one or more nitrogen/phosphorus-based flame retardants selected from the group consisting of reaction products of melamine and polyphosphoric acid, reaction products of melamine condensation products and polyphosphoric acid, and mixtures thereof. In the expanded beads, the flame retardant a and the flame retardant b are blended in a predetermined range. Details of the predetermined range will be described below.

In the expanded beads including the flame retardant a and the flame retardant b, cells observed in a cut surface formed by bisecting the expanded beads have an average cell diameter A indicating an average cell diameter of cells in the entire expanded beads and an average cell diameter B that is an average value of five cells selected in descending order of an area per cell, and the average cell diameter A and the average cell diameter B each have a value in a predetermined range. Details of the average cell diameter A and the average cell diameter B will be described below.

The expanded beads include the predetermined flame retardants a and flame retardants b, as flame retardants. According to the study of the inventors, it has been found that in polyamide-based resin expanded beads, sufficient flame retardancy is difficult to obtain even in the case of blending an appropriate amount of various flame retardants conventionally widely used as a flame retardant of a resin, such as a halogen-based flame retardant. Further study has revealed that desired flame retardancy can be exhibited only by using the flame retardant a and the flame retardant b in predetermined amounts in combination. However, polyamide-based resin expanded beads in which the flame retardant a and the flame retardant b are blended to an extent necessary for exhibiting desired flame retardancy have a new problem that the in-mold moldability may significantly deteriorate.

Maintaining good moldability has become possible by focusing on the cell diameter of polyamide-based resin expanded beads and adjusting two kinds of average cell diameters of the average cell diameter A and the average cell diameter B within a predetermined range, leading to provision of expanded beads capable of in-mold molding of a molded article of polyamide-based resin expanded beads that exhibits excellent flame retardancy.

Hereinafter, the expanded beads of the present invention will be described in more detail. In the description below, a preferred numerical range of the present invention may be appropriately indicated. In this case, a preferred range, a more preferred range, and a particularly preferred range can be determined, regarding the upper limit and the lower limit of the numerical range, from all combinations of the upper limit and the lower limit.

In the present description, "A to B" representing a numerical range has the same meaning as "A or more and B or less", and represents a numerical range including A and B that are end points of the numerical range.

In the following description, the term "base material" refers to a member that includes a base material resin, a flame retardant, and another optional additive and constitutes polyamide-based resin expanded beads. The base material resin is a polymer included in polyamide-based resin expanded beads, and specifically includes a polyamide-based resin and another polymer that is optionally blended.

In the following description, the fact that expanded beads have good in-mold moldability or good moldability means that in-mold molding can be performed for obtaining a molded article of the expanded beads that has three indexes of a fusion-bonding property, a surface property, and recoverability described below at levels each evaluated to be equal to or higher than a predetermined level.

[Flame Retardant]

In the expanded beads, the total of the amount of the flame retardant a blended and the amount of the flame retardant b blended is 10 parts by mass or more and 30 parts by mass or less with respect to 100 parts by mass of the base material resin. From the viewpoint of exhibiting more excellent flame retardancy while maintaining good moldability, the total is preferably 12 parts by mass or more and 28 parts by mass or less, and more preferably 15 parts by mass or more and 25 parts by mass or less.

In the expanded beads, the mass ratio of the amount of the flame retardant a blended to the amount of the flame retardant b blended is in a range of 90 : 10 to 30 : 70. The above-described mass ratio is a blending ratio between the flame retardant a and the flame retardant b in a case where the total of the flame retardant a and the flame retardant b is 100 mass%.

If the amount of the flame retardant a blended is more than 90 mass% in the total 100 mass%, sufficient flame retardancy may be not exhibited. From the viewpoint of exhibiting better flame retardancy, the amount of the flame retardant a blended is preferably 85 mass% or less, more preferably 80 mass% or less, still more preferably 75 mass% or less, and particularly preferably 70 mass% or less in the total 100 mass%.

Meanwhile, if the amount of the flame retardant b blended is more than 70 mass% in the total 100 mass%, the moldability of the expanded beads may deteriorate. From the viewpoint of exhibiting better moldability, the amount of the flame retardant b blended is preferably 60 mass% or less, more preferably 55 mass% or less, still more preferably 50 mass% or less, and particularly preferably 45 mass% or less in the total 100 mass%. From the above viewpoint, the mass ratio of the amount of the flame retardant a blended to the amount of the flame retardant b blended is preferably in a range of 85 : 15 to 40 : 60, more preferably in a range of 80 : 20 to 45 : 55, still more preferably in a range of 75 : 25 to 50 : 50, and particularly preferably in a range of 70 : 30 to 55 : 45, in 100 mass% of the total of the flame retardant a and the flame retardant b.

As described above, in the case of blending only the flame retardant a as a flame retardant, exhibition of good flame retardancy is difficult, so that combination use of the flame retardant b at a predetermined ratio is important. Meanwhile, as described above, the flame retardant b tends to cause deterioration of the moldability of the polyamide-based resin expanded beads. Therefore, the amount of the flame retardant b blended is preferably adjusted to 2 parts by mass or more and 10 parts by mass or less, more preferably 3 parts by mass or more and 9 parts by mass or less, and still more preferably 4 parts by mass or more and 8 parts by mass or less with respect to 100 parts by mass of the base material resin.

(Flame Retardant a)

The flame retardant a in the present invention is one or more phosphorus-based flame retardants selected from the group consisting of metal salts of phosphinic acid, metal salts of diphosphinic acid, and mixtures thereof. The phosphinic acid metal salt is represented by Formula (I) described below. The diphosphinic acid metal salt is represented by Formula (II) described below.

[Chemical Formula 1]

(I)

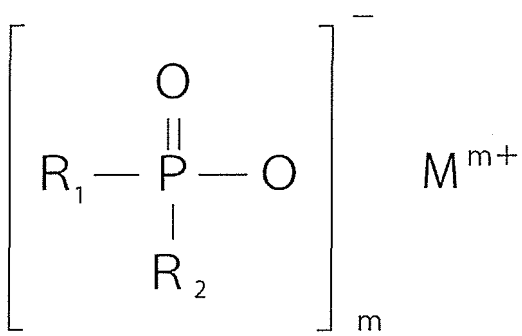

[Chemical Formula 2]

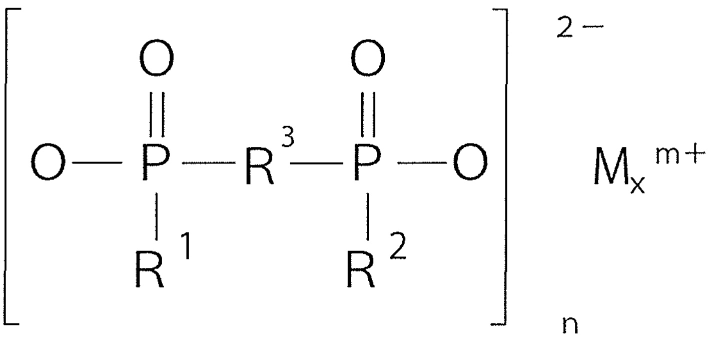

(II)

In Formulas (I) and (II) above, R1 and R2 may be the same or different. R1 and R2 each represent a linear or branched alkyl having 1 to 6 carbon atoms and/or aryl. In Formula (II), R3 represents a linear or branched alkylene having 1 to 10 carbon atoms, an arylene having 6 to 10 carbon atoms, an alkylarylene having 6 to 10 carbon atoms, or an arylalkylene having 6 to 10 carbon atoms. In Formulas (I) and (II), M represents a calcium ion, a magnesium ion, an aluminum ion, and/or a zinc ion. m is 2 or 3, n is 1 or 3, and x is 1 or 2.

The flame retardant a may be one compound represented by Formula (I) or (II), or may contain two or more compounds, and a phosphinic acid metal salt represented by Formula (I) is preferably contained as the flame retardant a. Specific examples of the metal salt of phosphinic acid include calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate. Among them, an aluminum salt of phosphinic acid is preferably contained as the flame retardant a, and aluminum diethylphosphinate is particularly preferably contained.

(Flame Retardant b)

The flame retardant b in the present invention is one or more nitrogen/phosphorus-based flame retardants selected from the group consisting of reaction products of melamine and polyphosphoric acid, reaction products of melamine condensation products and polyphosphoric acid, and mixtures thereof. Here, examples of the melamine condensation products include melam, melem, and melon.

For example, melamine polyphosphate, which is a reaction product of melamine and polyphosphoric acid, is represented by Formula (III) described below. In a reaction product of melamine condensation products and polyphosphoric acid, a condensate such as melam, melem, or melon is added instead of melamine in Formula (III) described below.

[Chemical Formula 3]

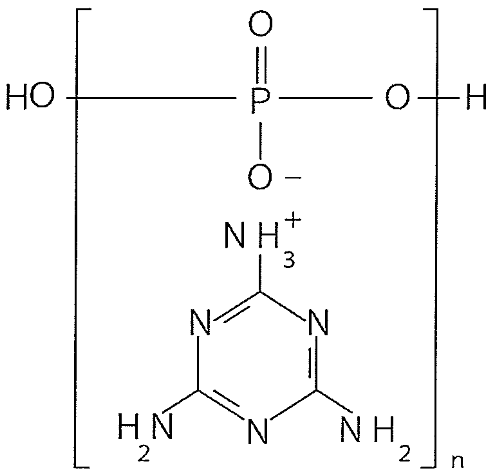

(III)

The flame retardant b may be one compound or may be two or more compounds represented by Formula (III), and melamine polyphosphate represented by Formula (III) is preferably contained as the flame retardant b. In Formula (III), n represents the degree of condensation, and is about 2 to 500, and preferably 3 to 50.

From the viewpoint of more easily obtaining expanded beads capable of molding a molded article exhibiting excellent moldability and excellent flame retardancy, the expanded beads preferably include the flame retardant a containing an aluminum salt of phosphinic acid as a main component and include the flame retardant b containing melamine polyphosphate as a main component, and more preferably include the flame retardant a only containing an aluminum salt of phosphinic acid and include the flame retardant b containing only melamine polyphosphate. To "include the flame retardant x containing y as a main component" means that y is 60 mass% or more in 100 mass% of the flame retardant x. It is particularly preferable that the content of phosphorus be 15 mass% or more and 30 mass% or less and the content of nitrogen be 10 mass% or more and 20 mass% or less in 100 mass% of melamine polyphosphate in the above-described combination. Examples of the flame retardant containing the flame retardant a and the flame retardant b as described above include a flame retardant commercially available as "Exolit OP 1312" manufactured by Clariant.

Another flame retardant:

The expanded beads may further include, in addition to the flame retardant a and the flame retardant b described above, another flame retardant other than both the flame retardant a and the flame retardant b. Examples of another flame retardant include zinc borate. If zinc borate is blended together with the flame retardant a and the flame retardant b, better flame retardancy is easily exhibited, and the average cell diameter A and the average cell diameter B are easily adjusted to predetermined ranges. This is presumed to be because the synergistic effect of the flame retardant a, the flame retardant b, and zinc borate further improves the flame retardancy and zinc borate favorably acts as cell nuclei during expanding of resin beads to facilitate production of expanded beads having a desired cell diameter. In the case of further blending another flame retardant in addition to the flame retardant a and the flame retardant b, the amount of another flame retardant blended is preferably 1 part by mass or more and 10 parts by mass or less, and more preferably 2 parts by mass or more and 8 parts by mass or less with respect to 100 parts by mass of the total of the amounts of the flame retardant a and the flame retardant b blended.

[Polyamide-Based Resin]

Examples of the polyamide-based resin included in the base material resin of the expanded beads include polyamides and polyamide copolymers, and a polyamide copolymer is preferable.

Examples of the polyamides include homopolymers such as poly(6-aminohexanoic acid) (polycaproamide, nylon 6) also known as poly(caprolactam), poly(laurolactam) (nylon 12), poly(hexamethylene adipamide) (nylon 66), poly(7-aminoheptanoic acid) (nylon 7), poly(8-aminooctanoic acid) (nylon 8), poly(9-aminonanoic acid) (nylon 9), poly(10-aminodecanoic acid) (nylon 10), poly(11-aminoundecanoic acid) (nylon 11), poly(hexamethylene sebacamide) (nylon 610), poly(decamethylene sebacamide) (nylon 1010), poly(hexamethylene azelamide) (nylon 69), poly(tetramethylene adipamide) (nylon 46), poly(tetramethylene sebacamide) (nylon 410), poly(pentamethylene adipamide) (nylon 56), and poly(pentamethylene sebacamide) (nylon 510).

The term "polyamide copolymer" means a copolymer having two or more kinds of repeating units each including an amide bond at least partially.

Examples of the polyamide copolymers include a polycaproamide/polyhexamethylene adipamide copolymer (nylon 6/66), a caprolactam/hexamethylene diaminoadipic acid/lauryl lactam (nylon 6/66/12), and a caprolactam/lauryl lactam copolymer (nylon 6/12).

As the polyamide-based resin, these polyamides and polyamide copolymers may be used singly, or may be used in combination of two or more kinds thereof. The polyamide-based resin is, among the above polyamide-based resins, preferably one or a combination of two or more selected from nylon 6, nylon 66, nylon 12, and nylon 6/66, and more preferably one or more selected from nylon 6/66/12 and nylon 6/66.

The polyamide-based resin preferably has a flexural modulus of 1000 MPa or more, more preferably 1200 MPa or more, and still more preferably 1500 MPa or more. Unlike an amide-based elastomer having a flexural modulus of about 600 MPa or less, a polyamide-based resin having a flexural modulus in the above range is less likely to shrink even when exposed to normal temperature after expanding, and thus expanded beads having a high expansion ratio are easily obtained, so that such a polyamide-based resin is preferable. The upper limit of the flexural modulus of the polyamide-based resin is about 3000 MPa. From the above viewpoint, the polyamide-based resin preferably has a flexural modulus of 1000 MPa or more and 3000 MPa or less, preferably 1200 MPa or more and 2800 MPa or less, and preferably 1500 MPa or more and 2500 MPa or less.

The flexural modulus of the polyamide-based resin can be determined by allowing a test piece to stand at a temperature of 23°C and a humidity of 50% for 24 hours, and then measuring the flexural modulus in accordance with JIS K7171: 2016.

(Melting Point of Polyamide-Based Resin)

The melting point of the polyamide-based resin is preferably 180°C or higher, more preferably 185°C or higher, and still more preferably 190°C or higher from the viewpoint of enhancing the heat resistance of a molded article of expanded beads obtained by in-mold molding of the expanded beads. Meanwhile, the melting point is preferably 280°C or lower, more preferably 260°C or lower, and still more preferably 240°C or lower from the viewpoint of reducing the load applied by the heating medium to the apparatus during in-mold molding. From the above viewpoints, the melting point of the polyamide-based resin is preferably in a range of 180°C or higher and 280°C or lower, more preferably 185°C or higher and 260°C or lower, and still more preferably 190°C or higher and 240°C or lower.

The melting point of the polyamide-based resin described above refers, in a case where the polyamide-based resin is singly included as the resin included in the expanded beads, to the melting point of the polyamide-based resin. The melting point of the polyamide-based resin described above refers, in a case where the expanded beads include a mixture of two or more polyamide-based resins, to the melting point of a mixture obtained by previously kneading the polyamide-based resins mixed at a predetermined composition ratio with an extruder or the like.

The melting point of the polyamide-based resin can be determined as the temperature at the top of a melting peak (melting peak temperature) of a DSC curve obtained, in accordance with JIS K7121: 1987, by heat-flux differential scanning calorimetry in which a sample is heated from 23°C to a temperature 30°C higher than the melting peak end temperature at a heat-up rate of 10°C/min (first heating), then the sample is maintained at the temperature for 10 minutes, and then cooled to 30°C at a cooling rate of 10°C/min, and the sample is heated again to a temperature 30°C higher than the melting peak end temperature at a heat-up rate of 10°C/min (second heating). In a case where the DSC curve has a plurality of melting peaks, the melting peak temperature of the melting peak having the largest area is adopted as the melting point of the polyamide-based resin. In the above measurement, a sample is used that is conditioned by allowing the polyamide-based resin to stand for 24 hours or more under an environment of an air temperature of 23°C and a relative humidity of 50%. As a measuring apparatus, for example, a highly sensitive differential scanning calorimeter "EXSTAR DSC7020" (manufactured by SII NanoTechnology Inc.) can be used.

(Base Material Resin)

The base material resin used for producing the expanded beads of the present invention may include only the above-described polyamide-based resin, or may include another polymer than the polyamide-based resin as long as an object and an effect of the present invention are not impaired.

Examples of another polymer than the polyamide-based resin include polymers such as another thermoplastic resins than the polyamide-based resin and thermoplastic elastomers.

Examples of another thermoplastic resins than the polyamide-based resin include polyethylene-based resins, polypropylene-based resins, polystyrene-based resins, vinyl acetate resins, thermoplastic polyester resins, acrylic acid ester resins, methacrylic acid ester resins, and polyarylene sulfide-based resins.

Examples of the thermoplastic elastomers include styrene-based thermoplastic elastomers, olefin-based thermoplastic elastomers, and amide-based thermoplastic elastomers.

The content of another polymer mentioned above is preferably 20 parts by mass or less, more preferably 10 parts by mass or less, still more preferably 5 parts by mass or less, and particularly preferably 3 parts by mass or less with respect to 100 parts by mass of the polyamide-based resin, and it is the most preferable that the content be 0, that is, the base material resin include only the polyamide-based resin as a polymer.

(Base Material)

The base material which constitutes the expanded beads of the present invention includes the base material resin, the flame retardant a, and the flame retardant b, and may include another flame retardant or an optional additive as long as an object and an effect of the present invention are not impaired. The resin beads formed by melt-kneading the base material and extruding the melt-kneaded base material from an extruder for granulation are used for production of the expanded beads of the present invention.

As the optional additive, various additives can be appropriately blended as necessary, and examples of the additives include colorants such as carbon-based colorants, flame retardant auxiliaries, terminal blocking agents, antistatic agents, conductivity imparting agents, weathering agents, lubricants, antioxidants, ultraviolet absorbers, metal deactivators, and crystal nucleating agents. The total of the amounts of these optional additives added depends on the intended use of the molded article, and is preferably 25 parts by mass or less, more preferably 15 parts by mass or less, still more preferably 10 parts by mass or less, and still even more preferably 5 parts by mass or less with respect to 100 parts by mass of the base material resin.

Carbon-based colorant:

For example, molded articles of expanded beads to be provided for automobile parts and the like may be produced using expanded beads including a carbon-based colorant. However, polyamide-based resin expanded beads including a carbon-based colorant tend to have lower moldability, and the resulting molded articles tend to have lower flame retardancy, than in the case of using polyamide-based resin expanded beads not including a carbon-based colorant. Meanwhile, the expanded beads of the present invention include the flame retardant a and the flame retardant b described above in predetermined ranges, and have an average cell diameter A and an average cell diameter B adjusted to predetermined ranges, and thus the moldability is secured, and the flame retardancy is sufficiently improved. Therefore, even in the case of including a carbon-based colorant, the expanded beads can be molded in a mold into a molded article of polyamide-based resin expanded beads that exhibits good flame retardancy.

From the viewpoint of providing a molded article of expanded beads in which the polyamide-based resin expanded beads include a carbon-based colorant, exhibit a desired color such as black, and exhibit good flame retardancy, the amount of the carbon-based colorant blended in 100 mass% of the expanded beads is preferably 0.5 mass% or more and 5 mass% or less, and more preferably 1 mass% or more and 4 mass% or less.

In the present description, the carbon-based colorant is a colorant containing carbon. The carbon-based colorant is usually black, and is a material that can exhibit black when included in expanded beads. Representative examples of the carbon-based colorant include carbon black and carbon nanotubes. Examples of carbon black include gas furnace black, oil furnace black, acetylene black, channel black, roller black, thermal black, and Ketjen black.

Flame retardant auxiliary:

Examples of the additive that can be optionally added to the base material include an NOR type hindered amine having a partial structure represented by Formula (IV) described below. Examples of R in Formula (IV) described below include an alkyl group, a cycloalkyl group, an aralkyl group, and an aryl group. * in Formula (IV) described below represents a bond with a freely selected structure. In a case where the expanded beads include an NOR type hindered amine, the NOR type hindered amine mainly acts as a flame retardant auxiliary. Use of the NOR type hindered amine in combination with the flame retardant a and the flame retardant b further ensures good flame retardancy even if the amounts of the flame retardant a and the flame retardant b blended are reduced within the predetermined ranges. Use of the NOR type hindered amine having a partial structure represented by Formula (IV) described below in combination facilitates suppression of blocking during production of expanded beads. The blocking refers to a phenomenon in which expanded beads adhere to each other immediately after release from a sealed vessel in a first-stage expanding step described below. Examples of commercially available products of the compound having a partial structure represented by Formula (IV) include flame

retardant auxiliaries NOR116 and Tinuvin 123 manufactured by BASF Japan Ltd. and FP-T80 manufactured by ADEKA CORPORATION, which are reaction products of N,N'-ethane-1,2-diylbis(1,3-propanediamine), cyclohexane, peroxidized 4-butylamino-2,2,6,6,-tetramthylpiperidine and 2,4,6-trichloro-1,3,5-triazine), decanedioic acid, bis(2,2,6,6-tetramethyl-1-(octyloxy)-4-piperidinyl)ester, and reaction products with 1,1-dimethylethylhydroperoxide and octane, bis(1-undecaneoxy-2,2,6,6-tetramethylpiperidin-4-yl)carbonate. In the case of blending the NOR type hindered amine in the polyamide-based resin expanded beads, the amount of the NOR type hindered amine blended is preferably 0.5 parts by mass or more and 8 parts by mass or less, and more preferably 1 part by mass or more and 5 parts by mass or less with respect to 100 parts by mass of the total of the flame retardant a and the flame retardant b.

[Chemical Formula 4]

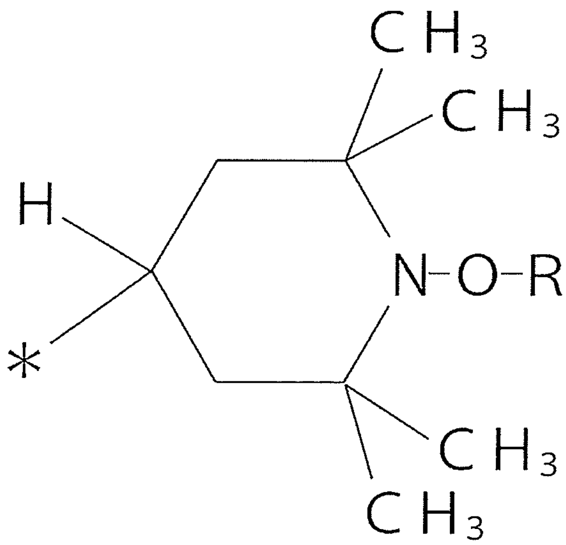

(IV)

[Average Cell Diameter A and Average Cell Diameter B]

The polyamide-based resin expanded beads have an average cell diameter A of 5 μm or more and 100 μm or less. An average cell diameter A within the above range means that the cells formed in the expanded beads are relatively small. If the polyamide-based resin expanded beads have too small an average cell diameter A, the in-mold moldability of the expanded beads may significantly deteriorate, and a molded article of expanded beads may be not obtained. From such a viewpoint, the average cell diameter A is preferably 10 μm or more, and more preferably 15 μm or more. The upper limit of the average cell diameter A of the polyamide-based resin expanded beads is preferably 80 μm or less, and more preferably 50 μm or less.

From the above viewpoint, the average cell diameter A of the polyamide-based resin expanded beads is preferably 10 μm or more and 80 μm or less, and more preferably 15 μm or more and 50 μm or less.

(Method of Measuring Average Cell Diameter A)

The average cell diameter A is measured as follows.

First, an expanded bead is substantially bisected to expose the cut surface. Then, a photograph of the cut expanded bead is taken so as to include the entire cut surface. On the taken photograph, four line segments are drawn at equal angles (that is, 45°) from the peripheral edge of the expanded bead to the opposing peripheral edge through the central portion of the expanded bead. Next, the value obtained by dividing the total length L of the four line segments by the total number N of cells in contact with the line segments (L/N) is taken as the average cell diameter a of one expanded bead. This operation is performed on 20 or more expanded beads, and the arithmetic average of the average cell diameters a is taken as the average cell diameter A of the expanded beads.

The polyamide-based resin expanded beads have an average cell diameter B measured with a method described below of 250 μm or less. If the average cell diameter B is too large, the in-mold moldability of the expanded beads may significantly deteriorate, and a molded article of expanded beads may be not obtained. From the viewpoint of providing expanded beads exhibiting more excellent moldability while exhibiting sufficient flame retardancy, the average

cell diameter B is preferably 200 μm or less, more preferably 180 μm or less, still more preferably 170 μm or less, and particularly preferably 160 μm or less.

(Method of Measuring B of Average Cell Diameter)

The average cell diameter B is measured as follows.

First, an expanded bead is substantially bisected to expose the cut surface. Then, a photograph of the cut expanded bead is taken so as to include the entire cut surface. The area of each cell is measured by image analysis of all cells observed in the cut surface. Then, in the cut surface, five cells are selected in descending order of the area per cell. For each of the selected five cells, the diameter of a virtual perfect circle having the same area as the cell is calculated. The value obtained by arithmetically averaging the five diameter values thus obtained is taken as the average cell diameter b of one expanded bead. This operation is performed on 20 or more expanded beads, and the arithmetic average of the average cell diameters b is taken as the average cell diameter B of the expanded beads.

As described above, the polyamide-based resin expanded beads including the flame retardant a and the flame retardant b tend to have a small average cell diameter A, and in such expanded beads, the moldability may significantly deteriorate in a case where the average cell diameter B is excessively large. This is considered to be because the expanded beads including the flame retardant a and the flame retardant b tend to have a cell film having a low strength and when excessively large cells are formed, the cells tend to break during molding. Meanwhile, the expanded beads of the present invention have an average cell diameter B adjusted to a predetermined value or less, and therefore the moldability can be maintained even if the expanded beads include the flame retardant a and the flame retardant b and have a small average cell diameter A.

The lower limit of the average cell diameter B is not particularly limited, and is preferably larger than the average cell diameter A, and is preferably 1.3 times or more, and more preferably 1.5 times or more the average cell diameter A. In other words, the ratio of the average cell diameter B to the average cell diameter A [B/A] is preferably more than 1, preferably 1.3 or more, and more preferably 1.5 or more. The fact that the ratio of the average cell diameter B to the average cell diameter A is within the above range means that relatively large cells with respect to the average cell diameter A of the expanded beads are formed in the expanded beads. If the polyamide-based resin expanded beads include the flame retardant a and the flame retardancy b in combination, cells formed in the expanded beads are small as a whole, and a relatively large cell is easily formed. From the viewpoint of maintaining the moldability of the expanded beads more reliably, the ratio of the average cell diameter B to the average cell diameter A (average cell diameter B/average cell diameter A) is preferably 10 or less, and more preferably 8 or less.

From the above viewpoint, the ratio [B/A] is preferably 1.3 or more and 10 or less, and more preferably 1.5 or more and 8 or less.

In the expanded beads, the difference between the average cell diameter A and the average cell diameter B [B - A] is preferably 200 μm or less, more preferably 180 μm or less, and still more preferably 150 μm or less.

As described above, in the present invention, the flame retardant a and the flame retardant b are used in combination in a predetermined range from the viewpoint of improving the flame retardancy, and therefore a cell having a relatively large diameter is easily generated in the expanded beads. In such expanded beads in which large and small cells are mixed, the upper limit of the difference [B - A] is preferably within the above range from the viewpoint of more reliably suppressing deterioration of the moldability caused by too large a value of the average cell diameter B with respect to the average cell diameter A. The lower limit of the difference [B - A] is not limited, and is preferably 60 μm or more, and more preferably 80 μm or more.

From the above viewpoint, the difference [B - A] is preferably 60 μm or more and 200 μm or less, more preferably 60 μm or more and 180 μm or less, and still more preferably 80 μm or more and 150 μm or less.

From the viewpoint of exhibiting excellent flame retardancy while maintaining better moldability, it is particularly preferable that the average cell diameter B be 250 μm or less and the difference between the average cell diameter A and the average cell diameter B [B - A] be 60 μm or more and 200 μm or less, it is more preferable that the average cell diameter B be 180 μm or less and the difference between the average cell diameter A and the average cell diameter B [B - A] be 60 μm or more and 180 μm or less, and it is still more preferable that the average cell diameter B be 160 μm or less and the difference between the average cell diameter A and the average cell diameter B [B - A] be 80 μm or more and 150 μm or less.

(Method of Adjusting Average Cell Diameter)

In the expanded beads, the method of adjusting the average cell diameter A and the average cell diameter B to the above-described ranges is not particularly limited, and examples of the method include the ways such as configurations 1 to 6 shown in the method of producing polyamide-based resin expanded beads described below.

[Polyamide-Based Resin Expanded Beads]

Next, the physical properties of the expanded beads will be described. Regarding the expanded beads, first-stage expanded beads and second-stage expanded beads will be described as appropriate. The first-stage expanded beads refer to expanded beads obtained by an initial expanding step. Such an initial expanding step may be referred to as first-stage expanding or a first-stage expanding step. The second-stage expanded beads refer to expanded beads obtained by the second expanding step performed using the first-stage expanded beads. The second expanding step may be referred to as second-stage expanding or a second-stage expanding step. In production of the expanded beads, in the case of performing only the first-stage expanding step, the first-stage expanded beads are expanded beads to be finally provided, and in the case of performing the second-stage expanding step, the second-stage expanded beads are expanded beads to be finally provided. The expanded beads include multi-stage expanded beads produced by multi-stage expanding of three or more-stage expanding performed using the second-stage expanded beads. Herein, expanded beads subjected to in-mold molding may be referred to as expanded beads to be finally provided or final expanded beads.

(Apparent Density of Expanded Beads)

The expanded beads preferably have an apparent density of 150 kg/$m^3$ or less, more preferably 100 kg/$m^3$ or less, and still more preferably 80 kg/$m^3$ or less from the viewpoint of the lightweight property and the flame retardancy of the molded article of expanded beads to be provided. From the viewpoint of the stiffness and the like of the molded article of expanded beads to be provided, the apparent density is preferably 10 kg/$m^3$ or more, more preferably 30 kg/$m^3$ or more, and still more preferably 50 kg/$m^3$ or more.

A preferable range of the apparent density of the expanded beads is, for example, 10 kg/$m^3$ or more and 150 kg/$m^3$ or less, 30 kg/$m^3$ or more and 100 kg/$m^3$ or less, or 50 kg/$m^3$ or more and 80 kg/$m^3$ or less. The way of adjusting the apparent density to such a range is not particularly limited, and for example, the second-stage expanding step described below is preferably performed.

The apparent density of the expanded beads is measured with the following method. First, expanded beads to be measured are left for 24 hours or more in an environment of an air temperature of 23°C and a relative humidity of 50% at 1 atm. The expanded bead group with a mass of w (g) thus obtained is immersed in an alcohol at 23°C in a measuring cylinder using a wire mesh or the like, the volume v ($cm^3$) of the expanded bead group is determined from the increase in the liquid level, and the mass w of the expanded bead group is divided by the volume v of the expanded bead group (w/v). Examples of the alcohol include ethanol. The unit of the value thus determined is converted into kg/$m^3$, and thus the apparent density (kg/$m^3$) of the expanded beads can be obtained.

The bulk density of the expanded beads is measured with the following method. First, expanded beads to be measured are left for 24 hours or more in an environment of an air temperature of 23°C and a relative humidity of 50% at 1 atm. The expanded bead group with a mass of W (g) thus obtained is put into a measuring cylinder, and the bottom surface of the measuring cylinder is lightly tapped on a surface several times to stabilize the height of the expanded bead group in the measuring cylinder. The bulk volume V (L) of the expanded bead group indicated by the scale of the measuring cylinder is read, and the mass W of the expanded bead group is divided by the bulk volume V of the expanded bead group (W/V). The unit of the value thus determined is converted into kg/$m^3$, and thus the bulk density (kg/$m^3$) of the expanded beads can be obtained.

(Bulk Ratio of Expanded Beads)

The expanded beads to be subjected to in-mold molding preferably have a bulk ratio M of 15 times or more, preferably 20 times or more, and more preferably 25 times or more, from the viewpoint of obtaining a molded article excellent in a lightweight property.

In order to obtain the above-described expanded beads having a large bulk ratio M, multi-stage expanding is preferably performed such as second-stage expanding described below. At the time of performing second-stage expanding, the ratio of the bulk ratio M2 of the expanded beads obtained by second-stage expanding (second-stage expanded beads) to the bulk ratio M1 of the expanded beads obtained by an initial expanding step (first-stage expanded beads) (M2/M1) is preferably adjusted to 1.2 or more and 3.0 or less. If the ratio (M2/M1) is 1.2 or more, a desired bulk ratio M2 is easily obtained, and if the ratio (M2/M1) is 3.0 or less, an excessive increase in the value of the average cell diameter B is suppressed, and expanded beads having good moldability are easily provided. From such a viewpoint, the ratio (M2/M1) is more preferably 1.2 or more and 2.0 or less.

The bulk ratio M1 of the first-stage expanded beads obtained in the first-stage expanding step is determined by dividing the density (unit: kg/$m^3$) of the base material resin included in the first-stage expanded beads by the bulk density (unit: kg/$m^3$) of the first-stage expanded beads. The bulk ratio M1 of the first-stage expanded beads can be adjusted by, for

example, the amount of the blowing agent added in the first-stage expanding step, the temperature at the time of expanding, and the pressure difference between the pressure in the sealed vessel and the pressure of the environment in which the contents are released from the sealed vessel. The bulk density of the first-stage expanded beads can be obtained by performing the above-described method of measuring the bulk density of the expanded beads using the first-stage expanded beads.

The bulk ratio M2 of the second-stage expanded beads obtained by second-stage expanding using the first-stage expanded beads is determined by dividing the density (unit: $kg/m^3$) of the base material resin included in the second-stage expanded beads by the bulk density (unit: $kg/m^3$) of the second-stage expanded beads. The bulk ratio M2 of the second-stage expanded beads can be adjusted by, for example, the pressure difference between the pressure in a cell in the first-stage expanded beads to which an internal pressure is applied and the pressure of the environment in which heating is performed, the heating temperature, and the heating time. The bulk density of the second-stage expanded beads can be obtained by performing the above-described method of measuring the bulk density of the expanded beads using the second-stage expanded beads.

The density of the base material resin included in the first-stage expanded beads and the density of the base material resin included in the second-stage expanded beads are the same as the density of the base material resin included in the resin beads used for producing these expanded beads.

(Closed Cell Content of Expanded Beads)

The expanded beads of the present invention preferably have a closed cell content of 40% or more, more preferably 50% or more, and still more preferably 60% or more from the viewpoint of providing expanded beads exhibiting excellent flame retardancy while maintaining good moldability. The upper limit of the closed cell content of the expanded beads is not particularly limited, and is about 99%.

The closed cell content of the expanded beads is measured as follows. First, an expanded bead group having a bulk volume of about 20 $cm^3$ is immersed in water, and thus the apparent volume Va of the expanded bead group is measured. Next, the expanded bead group having the apparent volume Va measured is sufficiently dried, and then the value (true volume Vx) of the volume of the expanded bead group (the sum of the volume of the resin included in the expanded beads and the total cell volume of the closed cell portion in the expanded beads) is measured in accordance with Procedure C described in ASTM-D2856-70.

For the measurement of the true volume Vx, an air comparison pycnometer is used. Examples of the air comparison pycnometer include an air comparison pycnometer "Beckman Model 1000 Air Comparison Pycnometer" manufactured by Tokyo-Science. Co, Ltd. Next, the closed cell content is calculated with the following equation (1). The closed cell content is measured five times using different measurement samples with a procedure similar to that described above, and the arithmetic average of the values obtained in the measurement is determined, and taken as the closed cell content of the expanded beads.

[Mathematical 1]

$$\text{Closed cell content (\%)} = (Vx - W/\rho) \times 100/(Va - W/\rho) \quad \cdots (1)$$

Vx: true volume ($cm^3$) of expanded bead group measured with above method

Va: apparent volume ($cm^3$) of expanded bead group measured from increase in water level at time of immersing expanded bead group in water in measuring cylinder

W: mass (g) of expanded bead group

$\rho$: density ($g/cm^3$) of resin included in expanded beads

(High-Temperature Peak)

In the expanded beads of the present invention, a crystal structure is preferably formed that exhibits a high-temperature peak described below. In the polyamide-based resin expanded beads exhibiting a high-temperature peak, blocking is suitably prevented in which the expanded beads produced in the first-stage expanding step adhere to each other. Therefore, the first-stage-expanded beads obtained in the first-stage expanding step are easily provided to the second-stage expanded beads, and the second-stage expanding step can be performed satisfactorily. The heat resistance and the moldability of the expanded beads are more reliably secured.

Here, the high-temperature peak refers to a melting peak (high-temperature peak b) having a peak top temperature appearing in the high temperature side from the melting peak intrinsic to the polyamide-based resin (intrinsic

peak a) in the first DSC curve (see Fig. 1) measured in accordance with JIS K7122: 1987 by heat flux differential scanning calorimetry at the time of heating 1 to 3 mg of polyamide-based resin expanded beads as a test piece from 23°C to a temperature 30°C higher than the melting peak end temperature at a heat-up rate of 10°C/min. Fig. 1 is an example of a DSC curve of polyamide-based resin expanded beads measured on the basis of heat-flux differential scanning calorimetry. Although Fig. 1 shows one high-temperature peak b, there may be two or more high-temperature peaks b.

It is considered that the intrinsic peak a is a peak caused by melting of an intrinsic crystal of the base material resin included in the expanded beads, and is a peak caused by melting of a usual crystal in the base material resin included in the expanded beads. Meanwhile, it is presumed that the high-temperature peak b having a peak top temperature in the high temperature side from the intrinsic peak a appears in a case where a secondary crystal different from a usual crystal is present in the base material resin included in the expanded beads.

The peak top temperature of the intrinsic peak a substantially coincides with the peak top temperature of the melting peak appearing in the second DSC curve described below. Meanwhile, the high-temperature peak b does not appear in the second DSC curve. Therefore, the intrinsic peak a and the high-temperature peak b can be distinguished from each other by comparing the shapes and the peak positions of the first and the second DSC curves.

Here, the second DSC curve refers to a DSC curve measured when the polyamide-based resin expanded beads after completion of measurement of the first DSC curve are maintained for 10 minutes at a temperature 30°C higher than the melting peak end temperature after the measurement of the first DSC curve, then cooled to 30°C at a cooling rate of 10°C/min, and heated again to a temperature 30°C higher than the melting peak end temperature at a heat-up rate of 10°C/min.

From the viewpoint of obtaining a molded article of expanded beads that is excellent in balance between a buffering property and stiffness, the total heat of fusion is preferably 3 J/g or more, more preferably 5 J/g or more, and still more preferably 7 J/g or more in the high-temperature peak b having a peak top temperature appearing in the high temperature side from the peak top temperature of the intrinsic peak a. From the viewpoint of widening the pressure range of the steam that enables molding during in-mold molding of the expanded beads, the total heat of fusion in the high-temperature peak is preferably 30 J/g or less, more preferably 20 J/g or less, and still more preferably 15 J/g or less. In a case where two or more of the high-temperature peaks b appear, the heat of fusion of the high-temperature peak b means the total heat of all of the high-temperature peaks b.

From the above viewpoint, the total heat of fusion of the high-temperature peak b of the expanded beads is preferably 3 J/g or more and 30 J/g or less, more preferably 5 J/g or more and 20 J/g or less, and still more preferably 7 J/g or more and 15 J/g or less.

The heat of fusion of the high-temperature peak b is determined as follows. That is, in the DSC curve shown in Fig. 1, a straight line is drawn that connects the point I corresponding to 80°C on the DSC curve and the point II corresponding to the end temperature of melting of the expanded beads. The end temperature of melting is the temperature at the end point of the high temperature side of the high-temperature peak b, and is an intersection of the high-temperature peak b and the baseline in the high temperature side from the high-temperature peak b in the DSC curve.

Next, as shown in Fig. 1, the point IV is defined as the intersection of the straight line passing through the maximum point III existing between the intrinsic peak a and the high-temperature peak b and parallel to the vertical axis of the graph and the straight line connecting the point I and the point II.

Then, the area of the intrinsic peak a is defined as the area surrounded by the straight line connecting the point I and the point IV, the straight line connecting the point III and the point IV, and the DSC curve connecting the point I and the point III. The area of the high-temperature peak b is defined as the area of the portion (hatched portion) surrounded by the straight line connecting the point IV and the point II, the straight line connecting the point III and the point IV, and the DSC curve connecting the point III and the point II. The value of the total heat of fusion of the expanded beads is calculated from the sum of the area of the intrinsic peak a and the area of the high-temperature peak b determined as described above, and the value of the heat of fusion of the high-temperature peak b is calculated from the area of the high-temperature peak b.

The way of obtaining the high-temperature peak b will be described in the method of producing expanded beads described below.

[Method of Producing Polyamide-Based Resin Expanded Beads]

Next, a preferred aspect of the method of producing the expanded beads (hereinafter, also simply referred to as the present production method) will be described.

The present production method includes a resin bead preparation step and an expanding step, and the average cell diameter A and the average cell diameter B of the expanded beads to be produced are adjusted to predetermined ranges. According to the present production method, expanded beads can be produced that can exhibit good moldability and provide a molded article of expanded beads having excellent flame retardancy.

(Resin Bead Preparation Step)

The resin bead preparation step is a step of melt-kneading a base material including a flame retardant and a polyamide-based resin to prepare a melt-kneaded product, and extruding the melt-kneaded product from an extruder to prepare polyamide-based resin beads. The melt-kneaded product extruded from an extruder is generally cut into a desired mass and shape. For example, the melt-kneaded product is extruded into a strand shape having a circular cross section, cooled with water, and then cut with a pelletizer, and thus cylindrical resin beads can be obtained.

The flame retardant used herein contains one or more phosphorus-based flame retardants (flame retardant a) selected from the group consisting of metal salts of phosphinic acid, metal salts of diphosphinic acid, and mixtures thereof, and one or more nitrogen/phosphorus-based flame retardants (flame retardant b) selected from the group consisting of reaction products of melamine and polyphosphoric acid, reaction products of melamine condensation products and polyphosphoric acid, and mixtures thereof.

At the time of blending the flame retardant a and the flame retardant b, the total of the amount of the flame retardant a blended and the amount of the flame retardant b blended is adjusted to 10 parts by mass or more and 30 parts by mass or less with respect to 100 parts by mass of the base material resin containing the polyamide-based resin, and the mass ratio of the amount of the flame retardant a blended to the amount of the flame retardant b blended is adjusted to 90 : 10 to 30 : 70 (the total of the flame retardant a and the flame retardant b is 100 mass%).

(Expanding step)

The expanding step is a step of expanding the polyamide-based resin beads obtained in the resin bead preparation step to produce polyamide-based resin expanded beads.

In the present production method, only the first-stage expanding step may be performed as the expanding step to produce expanded beads, or after the first-stage expanding step, the second-stage expanding step may be performed to produce expanded beads. After the second-stage expanding step, an expanding step including a third-stage expanding step or more may be further performed. In the present embodiment, a method of producing expanded beads by performing the second-stage expanding step will be mainly described as an example.

First-stage expanding step:

The first-stage expanding step is performed using the resin beads formed in the resin bead preparation step. In the first-stage expanding step, the resin beads, an aqueous medium such as water, an inorganic dispersant, a surfactant, and the like are supplied to a pressure vessel, and an expanded bead production process is performed that includes a dispersion step, a blowing agent impregnation step, and a release step, and thus expanded beads can be produced.

The dispersion step is a step of dispersing the resin beads in the aqueous medium containing the inorganic dispersant in the pressure vessel. Examples of the inorganic dispersant include inorganic substances such as aluminum oxide, tricalcium phosphate, magnesium pyrophosphate, zinc oxide, kaolin, mica, talc, and smectite. In addition, a dispersion auxiliary agent such as an anionic surfactant such as sodium dodecylbenzenesulfonate or sodium alkanesulfonate may be added together with the dispersant. In particular in the case of using a compound having a partial structure represented by Formula (IV) described above (flame retardant auxiliary) in combination with the flame retardant a and the flame retardant b, the inorganic dispersant and the dispersion auxiliary agent described above are preferably used in combination in the dispersion step. Thus, adhesion between the expanded beads (blocking) can be favorably prevented during the release step.

The blowing agent impregnation step is a step of impregnating the resin beads with a blowing agent such as carbon dioxide in the pressure vessel.

The release step is a step of releasing the resin beads including the blowing agent together with the aqueous medium from the pressure vessel to a pressure lower than the internal pressure of the pressure vessel and expanding the resin beads to obtain first-stage expanded beads.

The above-described first-stage expanding step may be referred to as "direct expanding method". However, the method of producing expanded beads of the present invention is not limited to this method, and instead of the direct expanding method that is the first-stage expanding step, for example, an "impregnation expanding method" can be adopted in which resin beads impregnated with a blowing agent are heated and expanded, and the expanded beads obtained thereby can be appropriately subjected to the second-stage expanding step described below.

In the case of producing the expanded beads having the high-temperature peak b described above, for example, the following method can be used.

That is, in the dispersion step and/or the blowing agent impregnation step described above, an adjustment is performed for obtaining the high-temperature peak b, for example, by adjusting the heating rate to adjust the temperature in the pressure vessel or by holding the temperature in the pressure vessel at a predetermined temperature for a

predetermined time. More specifically, for example, in the dispersion step and/or the blowing agent impregnation step described above, a first-stage holding step is performed in which the temperature is held at a temperature of (melting point of base material resin - 20°C) or higher and lower than (end temperature of melting of base material resin) for about 10 minutes to 60 minutes. Then, the temperature is adjusted to a temperature of (melting point of base material resin - 15°C) or higher and lower than (end temperature of melting of base material resin). Then, a second-stage holding step is performed, as necessary, in which the temperature is further held for about 10 minutes to 60 minutes. Next, the release step is performed, and thus expanded beads having a high-temperature peak can be produced.

In the first-stage expanding step in the present production method, an optional step can be appropriately added in addition to the above-described steps. In a case where the second-stage expanding step is not performed, the first-stage expanded beads produced in the first-stage expanding step are provided as the expanded beads.

Second-stage expanding step:

The second-stage expanding step is a step of supplying the first-stage expanded beads produced as described above to a pressure-resistant vessel, injecting a blowing agent into the pressure-resistant vessel to increase the internal pressure of cells in the first-stage expanded beads, and heating and expanding the beads. If the second-stage expanding step is performed, expanded beads exhibiting a desired apparent density can be easily produced.

Furthermore, if the ratio of the bulk ratio M2 of the second-stage expanded beads obtained by second-stage expanding to the bulk ratio M1 of the first-stage expanded beads (M2/M1) is adjusted to 1.2 or more and 3.0 or less, and preferably 1.2 or more and 2.0 or less as described above, second-stage expanded beads exhibiting a desired bulk ratio M2 are easily obtained, and an excessive increase in the value of the average cell diameter B in the second-stage expanded beads is suppressed.

(Adjustment of Average Cell Diameter)

In the present production method including the resin bead preparation step and the expanding step, it is important that the average cell diameter A of the polyamide-based resin expanded beads is adjusted to 5 μm or more and 100 μm or less and the average cell diameter B is adjusted to 250 μm or less for 5 cells selected from cells observed in a cut surface formed by bisecting the polyamide-based resin expanded beads, in descending order of the area per cell.

The method of adjusting the average cell diameter A and the average cell diameter B to the above-described ranges is not particularly limited, and at least one of the following configurations 1 to 6 is preferably performed to facilitate adjustment of the average cell diameter.

Configuration 1:

To the base material which constitutes the expanded beads, zinc borate is added in an amount within a range of 0.5 parts by mass or more and 10 parts by mass or less with respect to 100 parts by mass of the base material resin included in the base material. If zinc borate in such a range is added to the base material, the average cell diameter A and the average cell diameter B of the expanded beads are easily adjusted to predetermined ranges, and a molded article of expanded beads that exhibits more excellent flame retardancy is easily provided.

Configuration 2:

In the resin bead preparation step, the temperature of the melt-kneaded product extruded from an extruder is adjusted to 250°C or higher and 275°C or lower. Thus, the average cell diameter A and the average cell diameter B of the resulting expanded beads are easily adjusted to the above-described predetermined ranges. Although the reason for this is not clear, this is considered to be because the adjustment easily suppresses an action of a gas that is generated by decomposition of a part of the flame retardant a or a part of the flame retardant b and acts as a nucleating agent for cells or as a blowing agent.

Configuration 3:

A twin-screw extruder is used as the extruder in the resin bead preparation step. A twin screw extruder can more sufficiently knead the base material supplied to the extruder than a single screw extruder. If a melt-kneaded product is used that is sufficiently kneaded in this stage, the average cell diameter A and the average cell diameter B of the resulting expanded beads are easily adjusted to the above-described predetermined ranges. Although the reason for this is not clear, this is considered to be because a component exhibiting an action of a nucleating agent in the expanding step tends to be uniformly dispersed in the resin beads.

Configuration 4:

The direct expanding method is used in the expanding step to produce expanded beads. Here, if the amounts of the dispersant and the surfactant added in the dispersion step are set to predetermined ranges, blocking is more reliably suppressed, and the average cell diameter A and the average cell diameter B of the resulting expanded beads are easily adjusted to predetermined ranges. Specifically, the amount of the inorganic dispersant added in the aqueous medium is preferably 0.3 parts by mass or more and 2.0 parts by mass or less with respect to 100 parts by mass of the resin beads, and the amount of the surfactant added in the aqueous medium is preferably 0.2 parts by mass or more and 1.5 parts by mass or less with respect to 100 parts by mass of the resin beads.
In a case where the above-described flame retardant is contained, blocking between the expanded beads tends to easily occur in the expanding step, but the occurrence of blocking can be satisfactorily prevented by adding the inorganic dispersant within the above-described range.

Configuration 5:

The NOR type hindered amine having a partial structure represented by Formula (IV) is added in an amount within a range of 0.5 parts by mass or more and 8 parts by mass or less with respect to 100 parts by mass of the total of the flame retardant a and the flame retardant b, to the base material which constitutes the expanded resin. If the NOR type hindered amine in such a range is added to the base material, blocking is more reliably suppressed, and the average cell diameter A and the average cell diameter B of the resulting expanded beads are easily adjusted to predetermined ranges. Although the reason for this is not clear, this is considered to be because the NOR type hindered amine is likely to moderately attract the inorganic dispersant in the aqueous medium due to electrical interaction.

Configuration 6:

As shown in the present embodiment, the expanding step preferably includes the first-stage expanding step and the second-stage expanding step from the viewpoint of adjusting the average cell diameter.
Here, the first-stage expanding step is a step of dispersing polyamide-based resin beads in a sealed vessel supplied with a dispersion medium such as water and impregnating the polyamide-based resin beads with a blowing agent to prepare expandable polyamide-based resin beads, and then opening one end of the sealed vessel to release the expandable polyamide-based resin beads together with the dispersion medium to a pressure lower than the pressure in the sealed vessel and thus expand the expandable polyamide-based resin beads. That is, the first-stage expanding step includes the dispersion step, the blowing agent impregnation step, and the release step described above.
The second-stage expanding step is a step of supplying the first-stage expanded beads obtained in the first-stage expanding step to a pressure-resistant vessel, and expanding the first-stage expanded beads by applying an internal pressure and heating the first-stage expanded beads to obtain polyamide-based resin expanded beads exhibiting a bulk ratio M2 larger than the bulk ratio M1 of the first-stage expanded beads.
In the configuration 6, the ratio of the bulk ratio M2 of the polyamide-based resin expanded beads that is the second-stage expanded beads obtained in the second-stage expanding step to the bulk ratio M1 of the first-stage expanded beads obtained in the first-stage expanding step (M2/M1) is preferably adjusted to 1.2 or more and 3.0 or less, and more preferably adjusted to 1.2 or more and 2.0 or less. In this case, expansion of cells in the second-stage expanding step is suppressed, and the average cell diameter A and the average cell diameter B of the expanded beads are easily adjusted to predetermined ranges.
Regarding the configuration 6, in the second-stage expanding step, it is preferable that the pressure (pressurizing pressure) in the pressure-resistant vessel be adjusted to a range of 0.3 MPa or more and 1 MPa or less and then the pressure be held for at least 24 hours to apply an internal pressure to the first-stage expanded beads.
Regarding the configuration 6, in the second-stage expanding step, the first-stage expanded beads to which the internal pressure is applied are preferably heated with steam at 0.01 MPa or more and 0.08 MPa or less, and more preferably heated with steam at 0.01 MPa or more and 0.04 MPa or less. As described above, in the second-stage expanding step, the first-stage expanded beads to which the internal pressure is applied is heated with steam at a lower pressure to suppress expansion of cells, and the average cell diameter A and the average cell diameter B of the expanded beads are easily adjusted to predetermined ranges.

[Molded Article of Polyamide-Based Resin Expanded Beads]

The molded article of expanded beads of the present invention is produced by in-mold molding of the polyamide-based resin expanded beads. Such a molded article of expanded beads is a good molded article of expanded beads that is excellent in flame retardancy, a surface property, and recoverability, and has a high fusion-bonding ratio. Such a molded

article can be suitably used for various applications such as automobile members and building materials. The evaluation of the surface property and recoverability of the molded article of expanded beads and the measurement of the fusion-bonding ratio refer to the description in the Examples below.

(Burning Test)

The flame retardancy of the molded article of expanded beads is evaluated on the basis of a horizontal burning test (UL94 horizontal burning test) in accordance with the UL94 standard. The specific test method of the UL94 horizontal burning test is as follows.

From the molded article of expanded beads, 5 test pieces having a skin surface of 150 ± 1 mm in length × 50 ± 1 mm in width × 13 mm in thickness are cut out, and marked lines are drawn at positions where the distances are 25 mm, 60 mm, and 125 mm from one end in the longitudinal direction on a surface of 150 ± 1 mm in length × 50 mm ± 1 in width of the test piece. Each test piece is allowed to stand at an air temperature of 23°C and a relative humidity of 50% for 24 hours to adjust the condition, then the test piece is placed on a wire mesh so that the surface with the marked lines is upward, and cotton is placed under the test piece. Then, a burner with a blade end is adjusted to produce a blue flame of 38 mm ± 2 mm, and the flame is applied to the end of the test piece. After 1 minute, the burner is separated from the test piece by 100 mm or more, and the time and the distance up to extinguishment of the flame on the test piece are measured.

In the evaluation of the flame retardancy based on the UL94 horizontal burning test, the 5 test pieces are determined by the flame retardancy as follows on the basis of the time and the distance up to extinguishment of the flame on each test piece. Then, a class in which four or more of the five test pieces satisfy the conditions is determined as the flame retardancy of the molded article of expanded beads.

HF-1: All of the following conditions are satisfied: the extinguishment time is 2 seconds or less at the position where the distance from the end portion touched by the flame is 4/5 of the longitudinal dimension of the test piece; the extinguishment time is 10 seconds or less at the position where the distance from the end portion touched by the flame is 1/5 of the longitudinal dimension of the test piece; the burning glowing time of the test piece is 30 seconds or less; the cotton is not burnt; and the burning distance is 60 mm or less.

HF-2: The same conditions as in HF-1 are satisfied except that the cotton is burnt.

HBF: One of the following conditions is satisfied: the burning rate is within 40 mm/min from the marked line having a distance from the end portion touched by the flame of 25 mm to the marked line having a distance from the end portion of 125 mm; or burning is stopped between the marked line of 25 mm and the marked line of 125 mm.

(Molded Article Density)

The molded article of expanded beads preferably has a molded article density of 15 kg/$m^3$ or more and 100 kg/$m^3$ or less, and more preferably 20 kg/$m^3$ or more and 70 kg/$m^3$ or less, from the viewpoint of excellent balance between the lightweight property and the mechanical property such as stiffness, and from the viewpoint of reliably exhibiting flame retardancy.

The molded article density of the molded article of expanded beads is calculated by dividing the mass of the molded article of expanded beads by the volume calculated on the basis of the outer diameter dimension. In the case of a volume that is difficult to calculate from the outer dimension, the volume of the molded article of expanded beads can be determined by three-dimensional measurement.

[Method of Producing Molded Article of Polyamide-Based Resin Expanded Beads]

The molded article of expanded beads is produced by in-mold molding using the expanded beads. The in-mold molding widely includes known in-mold molding methods in which expanded beads are used. For example, the molded article of expanded beads of the present invention is produced as follows. First, the expanded beads are filled in a molding mold having a cavity corresponding to a desired shape of the molded article of expanded beads, and the expanded beads in the molding mold are heated by applying a predetermined molding pressure to the expanded beads with a heating medium such as steam. The molding pressure can be adjusted, for example, in a range of 0.12 MPa (G) or more and 0.30 MPa (G) or less. In the present description, (G) represents a gauge pressure, that is, a pressure value based on atmospheric pressure. Thus, the expanded beads in the cavity are further expanded by heating, and the expanded beads are fused to each other. Next, after completion of heating with steam or the like, the pressure is released, cooling of the molding mold and the molded article in the molding mold is immediately started, and when the pressure (surface pressure) generated on the inner surface of the molding mold is confirmed to reach 0.02 MPa (G), the cooling is terminated, and the molded article of expanded beads is taken out from the molding mold. The cooling method here is not particularly limited, and examples of the method include water cooling. By such a series of molding steps, a molded article of expanded beads is obtained according to the shape of the cavity.

Examples

Hereinafter, the present invention will be described in detail with reference to Examples, but the present invention is not limited thereto.

Tables 1 to 3 show the composition (grade) of the base material for production of the expanded beads in each of Examples and Comparative Examples and the amount of each composition blended, as follows.

In Tables 1 to 3, the amount of a flame retardant blended is the ratio (parts by mass) of the flame retardant blended with respect to 100 parts by mass of the base material resin, and Tables 1 to 3 show the total of the amounts of flame retardants blended, and show the amount of each blended composition used as a flame retardant. Tables 1 to 3 further show the total (parts by mass) of the amount of the flame retardant a blended and the amount of the flame retardant b blended, and the mass ratio (mass%) of each of the flame retardant a and the flame retardant b in 100 mass% of the total of the amount of the flame retardant a blended and the amount of the flame retardant b blended.

In Tables 1 to 3, the amount of a flame retardant auxiliary blended is the ratio (parts by mass) of the flame retardant auxiliary blended with respect to 100 parts by mass of the base material resin.

Tables 1 to 3 show, as the amount of a colorant blended, the ratio of the colorant blended in 100 mass% of the base material.

[Example 1]

<Preparation of Expanded Resin Beads>

[Production of Polyamide-Based Resin Beads]

A polyamide resin (grade: 5033B, manufactured by Ube Industries, Ltd.) as a base material resin, a colorant (carbon black), flame retardants (flame retardant a, flame retardant b, zinc borate), and a flame retardant auxiliary to be blended were supplied in amounts shown in Table 1 to a twin-screw extruder, and melt-kneaded to obtain a melt-kneaded product. In addition, talc as a cell nucleating agent was supplied so that the amount of talc was 8000 ppm in the resin beads obtained as described below. The melt-kneaded product adjusted to an extrusion temperature of 274°C was extruded as a single-layer strand having a circular cross section from a pore of a spinneret attached to the tip of the extruder, and the extruded strand was cooled with water, then cut with a pelletizer so that one cut piece has a mass of about 2 mg, and dried to obtain polyamide-based resin beads.

The polyamide resin (5033B) is a polyamide 6/66 copolymer (nylon 6/66) having a ratio of polyamide 6/polyamide 66 of 85/15, a melting point of 197°C, a density of 1.14 g/cm$^3$, a flexural modulus of 1300 MPa, and a melt mass flow rate (MFR) measured at 230°C under a load of 2.16 kg of 3.5 g/10 min, and the product name is UBE NYLON 5033B.

The grade OP1312 is a flame retardant "Exolit OP 1312" manufactured by Clariant, and contains an aluminum salt of phosphinic acid as the flame retardant a and melamine polyphosphate as the flame retardant b at a mass ratio of 2 : 1. The grade OP1312 contains 5 mass% of zinc borate.

<Production of Expanded Beads>

First-stage expanding step:

The first-stage expanding step was performed as follows using the polyamide-based resin beads obtained as described above.

First, 1000 g of the polyamide-based resin beads and 3 liters of a dispersion medium (water) were put into a 5 liter sealed vessel equipped with a stirrer, and 6 g of kaolin as a dispersant and 0.6 g of sodium alkylbenzene sulfonate as a surfactant with respect to 100 parts by mass of the polyamide-based resin beads were further added to the dispersion medium. While the contents in the sealed vessel were stirred, the temperature of the dispersion medium was raised from room temperature (23°C). After the temperature of the dispersion medium reached the impregnation temperature (135.2°C), carbon dioxide as a blowing agent was injected into the sealed vessel until the equilibrium vapor pressure in the sealed vessel reached 4 MPa. At this time, the heating time was 30 minutes until the temperature of the dispersion medium reached the impregnation temperature (135.2°C) from room temperature (23°C). Next, conditions of a temperature of the dispersion medium of 135.2°C and an equilibrium vapor pressure of 4 MPa were held for 15 minutes so that the crystallinity having a high-temperature peak is exhibited, and thus resin beads (expandable resin beads) impregnated with the blowing agent was obtained.

Then, the expandable resin beads were released together with the dispersion medium to atmospheric pressure (0.1 MPa) and thus foamed and expanded. The resulting expanded beads were aged in an oven at 60°C for 24 hours and then slowly cooled to obtain first-stage expanded beads having a bulk ratio of 17.3 times.

Second-stage expanding step:

The first-stage expanded beads after aging were put into a pressurizable sealed vessel. Then, the pressure in the sealed vessel was increased over the time shown in Table 1 (1 day) from the normal pressure up to the pressurizing pressure shown in Table 1 (0.6 MPa) to pressurize the expanded beads. The state in which the expanded beads were pressurized at the pressure was maintained for 24 hours to impregnate cells in the expanded beads with air. Then, the expanded beads were taken out from the sealed vessel. Then, the expanded beads were supplied to a second-stage expanding apparatus and expanded by supplying steam (steam pressure: 0.05 MPa) into the apparatus, and thus second-stage expanded beads having a bulk ratio of 26.6 times were obtained. In Example 1, the second-stage expanded beads obtained by the second-stage expanding were used as the final expanded beads.

<Production of Molded Article of Expanded Beads>

[Production of Molded Article of Polyamide-Based Resin Expanded Beads]

First, the expanded beads were filled in a pressure-resistant vessel, the pressure in the pressure-resistant vessel was increased over 12 hours to a set pressure (0.08 MPa) shown in Table 1, and the state of being pressurized at the pressure was maintained for 24 hours to apply an internal pressure to the expanded beads. Then the cavity of a mold was filled with the expanded beads. As a molding mold, a mold was used that had a flat plate-shaped cavity of 200 mm in length × 65 mm in width × 40 mm in thickness. The mold was opened by 4 mm from the completely closed state, and the amount of cracking was adjusted to 10% with respect to the thickness of 40 mm of the cavity of the mold. After completion of the filling, the mold was completely closed.

Then, steam was supplied into the molding cavity to perform in-mold molding by heating, and thus a plate-shaped molded article of expanded beads was obtained. In the heating method, steam was supplied for 5 seconds in a state where the drain valves of the both side molds were opened to perform preheating (exhaust step), then steam was supplied from the movable side mold, then steam was supplied from the fixed side mold, and then the expanded beads were heated up to the molding pressure (0.16 MPa (G)) shown in Table 1.

After completion of the heating, the pressure was released, the molded article was cooled with water until the surface pressure due to the expanding force of the molded article was decreased to 0.02 MPa (G), then the mold was opened, and the molded article was taken out from the mold. The released molded article was aged in an oven at 80°C for 12 hours, and then slowly cooled to room temperature. Thus, a molded article of expanded beads was obtained.

[Examples 2 to 7 and Comparative Examples 1 to 7]

Expanded beads and molded articles of expanded beads were produced in the same manner as in Example 1 except that the contents were changed to those shown in Tables 1 to 3, and used in Examples 2 to 7 and Comparative Examples 1 to 7.

OP1230 used together with the OP 1312 in Example 7 is a flame retardant "Exolit OP 1230" manufactured by Clariant, and is an aluminum salt of phosphinic acid. In Examples 2 and 4, a flame retardant auxiliary NOR116 manufactured by BASF Japan Ltd. was used as a flame retardant auxiliary.

The grade MC6000 used in Comparative Example 4 is a flame retardant that is manufactured by Nissan Chemical Corporation and contains melamine cyanurate as a main component, the grade SR-T20000 used in Comparative Example 5 is a flame retardant that is manufactured by Sakamoto Yakuhin Kogyo Co., Ltd. and contains brominated epoxy as a main component, the grade Hiromaster MA-80 used in Comparative Example 6 is a flame retardant that is manufactured by SUZUHIRO CHEMICAL CO., LTD. and contains brominated polystyrene as a main component, and the grade PHOSMEL used in Comparative Example 7 is a flame retardant that is manufactured by Nissan Chemical Corporation and contains melamine polyphosphate.

[Measurement of Physical Properties of Expanded Beads]

The physical properties of the first-stage expanded beads and/or the final expanded beads obtained as described above were measured as follows. In Example 3 and Comparative Examples 3 to 7, second-stage expanding was not performed, and therefore the first-stage expanded beads were used as the final expanded beads. Table 1 to 3 show the measurement results.

(Bulk Ratio of Expanded Beads)

The bulk ratio M1 of the first-stage expanded beads obtained in the first-stage expanding step was determined by

dividing the density (1140 kg/$m^3$) of the base material resin included in the first-stage expanded beads by the bulk density (unit: kg/$m^3$) of the first-stage expanded beads described below.

The bulk ratio M2 of the second-stage expanded beads obtained by second-stage expanding using the first-stage expanded beads was determined by dividing the density (1140 kg/$m^3$) of the base material resin included in the second-stage expanded beads by the bulk density (unit: kg/$m^3$) of the second-stage expanded beads described below.

Furthermore, the ratio of the bulk ratio M2 to the bulk ratio M1 determined as described above (M2/M1) was calculated.

(Bulk Density of Expanded Beads)

First, the first-stage expanded beads or the second-stage expanded beads were left for 24 hours or more in an environment of an air temperature of 23°C and a relative humidity of 50% at 1 atm. The expanded bead group with a mass of W (g) thus obtained was put into a measuring cylinder, and the bottom surface of the measuring cylinder was lightly tapped on a surface several times to stabilize the height of the expanded bead group in the measuring cylinder. The bulk volume V (L) of the expanded bead group indicated by the scale of the measuring cylinder was read, and the mass W of the expanded bead group was divided by the bulk volume V of the expanded bead group (W/V). The unit of the value thus determined was converted into kg/$m^3$, and thus the bulk density (kg/$m^3$) of the expanded beads was obtained.

(Apparent Density of Expanded Beads)

The apparent density of the expanded beads was measured with the following method. First, expanded beads to be measured were left for 24 hours or more in an environment of an air temperature of 23°C and a relative humidity of 50% at 1 atm. The expanded bead group with a mass of w (g) thus obtained was immersed in ethanol at 23°C in a measuring cylinder using a wire mesh or the like, the volume v ($cm^3$) of the expanded bead group was determined from the increase in the liquid level, and the mass w of the expanded bead group was divided by the volume v of the expanded bead group (w/v). The unit of the value thus determined was converted into kg/$m^3$, and thus the apparent density (kg/$m^3$) of the expanded beads was obtained.

(Average Cell Diameter A of Expanded Beads)

First, an expanded bead was substantially bisected to expose the cut surface. Then, a photograph of the cut expanded bead was taken so as to include the entire cut surface. On the taken photograph, four line segments were drawn at equal angles (that is, 45°) from the peripheral edge of the expanded bead to the opposing peripheral edge through the central portion of the expanded bead. Next, the value obtained by dividing the total length L of the four line segments by the total number N of cells in contact with the line segments (L/N) was taken as the average cell diameter a of one expanded bead. This operation was performed on 50 expanded beads, and the arithmetic average of the average cell diameters a was taken as the average cell diameter A of the expanded beads.

(Average Cell Diameter B of Expanded Beads)

An expanded bead was substantially bisected to expose the cut surface. Then, a photograph of the cut expanded bead was taken so as to include the entire cut surface. The area of each cell was measured by image analysis of all cells observed in the cut surface. Then, in the cut surface, five cells were selected in descending order of the area per cell. For each of the selected five cells, the diameter of a virtual perfect circle having the same area as the cell was calculated. The value obtained by arithmetically averaging the five diameter values thus obtained was taken as the average cell diameter b of one expanded bead. This operation was performed on 50 expanded beads, and the arithmetic average of the average cell diameters b was taken as the average cell diameter B of the expanded beads.

The difference between the value of the average cell diameter B and the value of the average cell diameter A obtained as described above (B - A) and the ratio of the value of the average cell diameter B to the value of the average cell diameter A (B/A) were calculated.

(Heat of Fusion of High-Temperature Peak of First-Stage Expanded Beads)

The heat of fusion in the high-temperature peak of the first-stage expanded beads was determined on the basis of the testing methods for heat of transitions of plastics described in JIS K7122: 1987 from a DSC curve obtained by using 3 mg of the first-stage expanded beads as a test piece and heating the test piece from 23°C to a temperature 30°C higher than the melting peak end temperature of the test piece at a heat-up rate of 10°C/min. Specifically, as described above using Fig. 1, in the DSC curve obtained by using the expanded beads, a straight line was drawn that connected the point I

corresponding to 80°C on the DSC curve and the point II corresponding to the end temperature of melting of the expanded beads. The end temperature of melting is the temperature at the end point of the high temperature side of the high-temperature peak b, and is an intersection of the high-temperature peak b and the baseline in the high temperature side from the high-temperature peak b in the DSC curve.

Next, as referred to in Fig. 1, the point IV was defined as the intersection of the straight line passing through the maximum point III existing between the intrinsic peak a and the high-temperature peak b and parallel to the vertical axis of the graph and the straight line connecting the point I and the point II.

Then, the area of the intrinsic peak a was defined as the area of the portion surrounded by the straight line connecting the point I and the point IV, the straight line connecting the point III and the point IV, and the DSC curve connecting the point I and the point III. The area of the high-temperature peak b was defined as the area of the portion (hatched portion) surrounded by the straight line connecting the point IV and the point II, the straight line connecting the point III and the point IV, and the DSC curve connecting the point III and the point II. The value of the heat of fusion in the high-temperature peak (J/g) of the first-stage expanded beads was calculated from the area of the high-temperature peak b determined as described above. The value of the heat of fusion in the high-temperature peak of the second-stage expanded beads usually coincides with the value of the heat of fusion in the high-temperature peak of the first-stage expanded beads used for producing the second-stage expanded beads. In the present Examples, the value of the heat of fusion in the high-temperature peak of the second-stage expanded beads coincided with the value of the heat of fusion in the high-temperature peak of the first-stage expanded beads used for producing the second-stage expanded beads in all Examples, and therefore Tables describe only the heat of fusion in the high-temperature peak of the first-stage expanded beads.

(Closed Cell Content of Expanded Beads)

Using the first-stage expanded beads or the second-stage expanded beads, an expanded bead group having a bulk volume of about 20 $cm^3$ was immersed in water, and thus the apparent volume Va of the expanded bead group was measured. Next, the expanded bead group having the apparent volume Va measured was sufficiently dried, and then the value (true volume Vx) of the volume of the expanded beads (the sum of the volume of the resin included in the expanded beads and the total cell volume of the closed cell portion in the expanded beads) was measured in accordance with Procedure C described in ASTM-D2856-70. For the measurement of the true volume Vx, an air comparison pycnometer "Beckman Model 1000 Air Comparison Pycnometer" manufactured by Tokyo-Science Co., Ltd. was used.

Next, the closed cell content was calculated with the following equation (1). The closed cell content was measured five times using different measurement samples with a procedure similar to that described above, and the arithmetic average of the values obtained in the measurement was determined, and taken as the closed cell content of the expanded beads.

[Mathematical 2]

$$\text{Closed cell content (\%)} = (Vx - W/\rho) \times 100/(Va - W/\rho) \quad \cdots (1)$$

Vx: true volume ($cm^3$) of expanded bead group measured with above method
Va: apparent volume ($cm^3$) of expanded bead group measured from increase in water level at time of immersing expanded bead group in water in measuring cylinder
W: mass (g) of expanded bead group
ρ: density ($g/cm^3$) of resin included in expanded beads

[Measurement of Physical Properties of Molded Article of Expanded Beads]

The physical properties of the molded article of expanded beads produced as described above were measured or evaluated as follows. Tables 1 to 3 show the results. In the evaluation, if the result of the evaluation was △ or ○, the result was judged to indicate practicality.

(Molded Article Density of Molded Article of Expanded Beads)

The molded article density was calculated by dividing the mass of the molded article of expanded beads by the volume calculated on the basis of the outer diameter dimension.

(Evaluation of Surface Property of Molded Article of Expanded Beads)

The surface property of the molded article of expanded beads was visually observed and evaluated as follows.

○ (Good) ··· Gaps in the expanded beads are completely filled on the surface of the molded article.
△ (Normal) ··· Gaps not filled are found partially in the expanded beads on the surface of the molded article.
× (Bad) ··· Gaps not filled are found here and there in the expanded beads on the surface of the molded article.

(Fusion-Bonding Ratio of Molded Article of Expanded Beads)

A test piece (100 mm in length × 100 mm in width × thickness: a thickness of the molded article of expanded beads) was cut out from the central portion of the molded article of expanded beads, a cut of about 5 mm was made in the thickness direction of each test piece with a cutter, and then the test piece was broken from the cut portion. Next, the number (n) of all of the expanded beads present on the fracture surface of the molded article of expanded beads and the number (b) of the expanded beads subjected to material fracture were measured. Then, the ratio of the number (b) of the expanded beads subjected to material fracture to the number (n) of expanded beads was expressed as a percentage of the fusion-bonding ratio (%), and evaluated as follows.

| | |
|---|---|
| ○ (Good) | The fusion-bonding ratio is 80% or more. |
| × (Bad) | The fusion-bonding ratio is less than 80%. |

(Recoverability of Molded Article of Expanded Beads)

After in-mold molding, the molded article of expanded beads taken out from the molding mold was allowed to stand for 24 hours in an environment of an air temperature of 23°C and a relative humidity of 50% and thus aged.
The thickness of the molded article of expanded beads after aging was measured at positions 10 mm away from the 4 corners toward the center of the skin surface in plan view of the molded article of expanded beads viewed from the thickness direction. Among these thicknesses, the largest value was regarded as the thickness of the corner portion of the molded article of expanded beads. Separately from this, the thickness of the same molded article of expanded beads was measured at the central position in both the longitudinal direction and the lateral direction in plan view of the molded article of expanded beads viewed from the thickness direction, and the obtained value was regarded as the thickness of the central portion of the molded article of expanded beads. Then, the ratio (%) of the thickness of the central portion to the thickness of the corner portion of the molded article in expanded beads was calculated and evaluated as follows.

| | |
|---|---|
| ○ (Good) | The ratio (%) is 90% or more. |
| Δ (Normal) | The ratio (%) is 85% or more and less than 90%. |
| × (Bad) | The ratio (%) is less than 85%. |

(Flame Retardancy of Molded Article of Expanded Beads)

The flame retardancy of the molded article of expanded beads was evaluated as follows on the basis of a horizontal burning test (UL94 horizontal burning test) in accordance with the UL94 standard.
First, from the molded article of expanded beads, 5 test pieces having a skin surface of 150 ± 1 mm in length × 50 ± 1 mm in width × 13 mm in thickness were cut out, and marked lines were drawn at positions where the distances were 25 mm, 60 mm, and 125 mm from one end in the longitudinal direction on a surface of 150 ± 1 mm in length × 50 mm ± 1 in width of the test piece. Each test piece was allowed to stand at an air temperature of 23°C and a relative humidity of 50% for 24 hours to adjust the condition, then the test piece was placed on a wire mesh so that the surface with the marked lines was upward, and cotton was placed under the test piece. Then, a burner with a blade end was adjusted to produce a blue flame of 38 mm ± 2 mm, and the flame was applied to the end of the test piece. After 1 minute, the burner was separated from the test piece by 100 mm or more, and the time and the distance up to extinguishment of the flame on the test piece were measured.
On the basis of the time and the distance measured as described above, the five test pieces were determined by the flame retardancy into classes of HF-1, HF-2, and HBF. For details of HF-1, HF-2, and HBF, the description for the expanded beads above is referred to.
Then, a class in which four or more of the five test pieces satisfy the conditions was determined as the flame retardancy of the molded article of expanded beads, and the class of each molded article is shown in Tables 1 to 3. Tables 1

to 3 also showed the number of pieces that achieved the criterion of HF-1 among the five test pieces in parentheses next to the determined class for each of Examples and Comparative Examples.

(Evaluation of Drip of Molded Article of Expanded Beads)

In the UL94 horizontal test described above, the presence or absence of a drip of the resin from the test piece was observed and evaluated as follows.

○ Cotton is not ignited by a drip.
× Cotton is ignited by a drip.

[Table 1]

| | | | | Example 1 | Example 2 | Example 3 | Example 4 | Example 5 |
|---|---|---|---|---|---|---|---|---|
| Base material | Base material resin | Grade | | 5033B | 5033B | 5033B | 5033B | 5033B |
| | | Amount of resin blended | parts by mass | 100 | 100 | 100 | 100 | 100 |
| | Flame retardant | Grade | | OP1312 | OP1312 | OP1312 | OP1312 | OP1312 |
| | | Amount of flame retardant blended (total) | parts by mass | 20 | 15 | 20 | 15 | 20 |
| | | Zinc borate | parts by mass | 1,0 | 0,8 | 1,0 | 0,8 | 1,0 |
| | | Flame retardant a + b | parts by mass | 19 | 14 | 19 | 14 | 19 |
| | | Ratio of a in flame retardant a + b | mass% | 66 | 66 | 66 | 66 | 66 |
| | | Ratio of b in flame retardant a +b | mass% | 34 | 34 | 34 | 34 | 34 |
| | Flame retardant auxiliary | Grade | | - | NOR116 | - | NOR116 | - |
| | | Amount of flame retardant auxiliary blended | parts by mass | - | 0,5 | - | 0,5 | - |
| | Colorant | Carbon black | mass% | 2,5 | 2,5 | 2,5 | 2,5 | 2,5 |
| Resin beads | Extrusion temperature of melt-kneaded product | | °C | 274 | 273 | 274 | 273 | 278 |

(continued)

| | | | | Example 1 | Example 2 | Example 3 | Example 4 | Example 5 |
|---|---|---|---|---|---|---|---|---|
| Expanded beads | First-stage expanding condition | Sealed vessel volume | L | 5 | 5 | 5 | 5 | 5 |
| | | Water | L | 3 | 3 | 3,5 | 3 | 3 |
| | | Resin beads | g | 1000 | 1000 | 500 | 1000 | 1000 |
| | | Dispersant | g | 6 | 6 | 2 | 6 | 3 |
| | | Surfactant | g | 0,6 | 0,6 | 0,2 | 0,6 | 0,2 |
| | | Expanding temperature | °C | 135,2 | 135,3 | 133 | 135,3 | 135,4 |
| | | Equilibrium vapor pressure | MPa | 4 | 4 | 3,8 | 4 | 4 |
| | Physical properties of first-stage expanded beads | Bulk ratio M1 | × | 17,3 | 16,5 | 17,5 | 16,5 | 13,5 |
| | | Apparent density | kg/$m^3$ | 105,4 | 110,5 | 104,2 | 110,5 | 135,1 |
| | | Average cell diameter A | µm | 19 | 20 | 22 | 20 | 24 |
| | | Heat of fusion of high-temperature peak | J/g | 9,8 | 9,2 | 8,8 | 9,2 | 9,0 |
| | | Closed cell content | % | 73,5 | 79,5 | 74 | 79,5 | 64,5 |
| | Second-stage expanding condition | Pressurizing pressure | MPa | 0,6 | 0,6 | Non | 0,6 | 0,6 |
| | | Time up to pressurizing pressure | Day | 1 | 1 | | 1 | 1 |
| | | Steam pressure in second-stage expanding | MPa | 0,05 | 0,05 | | 0,06 | 0,07 |
| | Physical properties of (final) expanded beads | Bulk ratio M2 | × | 26,6 | 23,4 | 17,5 | 27,8 | 31,5 |
| | | M2/M1 | - | 1,5 | 1,4 | - | 1,7 | 2,3 |
| | | Apparent density | kg/$m^3$ | 68,6 | 77,9 | 104,2 | 65,6 | 57,9 |
| | | Average cell diameter A | µm | 23 | 17 | 20 | 20 | 24 |
| | | Closed cell content | % | 68 | 79 | 74 | 74 | 45 |
| | | Average cell diameter B | µm | 114 | 150 | 118 | 158 | 185 |
| | | B/A | - | 4,9 | 8,8 | 5,9 | 7,9 | 7,7 |
| | | B - A | µm | 91 | 133 | 98 | 138 | 161 |

(continued)

| | | | | Example 1 | Example 2 | Example 3 | Example 4 | Example 5 |
|---|---|---|---|---|---|---|---|---|
| Molded article of expanded beads | Molding condition | Internal pressure (set pressure) | MPa | 0,08 | 0,08 | 0,08 | 0,1 | 0,08 |
| | | Amount of cracking | % | 10 | 10 | 10 | 10 | 10 |
| | | Molding pressure | MPa(G) | 0,16 | 0,16 | 0,18 | 0,18 | 0,16 |
| | Physical properties | Density of molded article | $kg/m^3$ | 62,5 | 56,5 | 68,8 | 39,8 | 41,1 |
| | | Surface property | | ○ | ○ | ○ | ○ | Δ |
| | | Fusion-bonding ratio | | ○ | ○ | ○ | ○ | ○ |
| | | Recoverability | | ○ | ○ | ○ | ○ | Δ |
| | | Flame retardancy | | HF-1(4/5) | HF-1(4/5) | HF-1(4/5) | HF-1(4/5) | HF-1(5/5) |
| | | Evaluation of drip | | ○ | ○ | ○ | ○ | ○ |

Table 2

| | | | | Example 6 | Example 7 | Comparative Example 1 | Comparative Example 2 | Comparative Example 3 |
|---|---|---|---|---|---|---|---|---|
| Base material | Base material resin | Grade | | 5033B | 5033B | 5033B | 5033B | 5033B |
| | | Amount of resin blended | parts by mass | 100 | 100 | 100 | 100 | 100 |
| | Flame retardant | Grade | | OP1312 | OP1312 +OP1230 | Non | OP1312 | OP1230 |
| | | Amount of flame retardant blended (total) | parts by mass | 20 | 20 | - | 20 | 20 |
| | | Zinc borate | parts by mass | 1,0 | 0,6 | - | 1,0 | - |
| | | Flame retardant a + b | parts by mass | 19 | 19 | - | 19 | 20 |
| | | Ratio of a in flame retardant a + b | mass% | 66 | 80 | - | 66 | 100 |
| | | Ratio of b in flame retardant a+b | mass% | 34 | 20 | - | 34 | - |
| | Flame retardant auxiliary | Grade | | - | - | - | - | - |
| | | Amount of flame retardant auxiliary blended | parts by mass | - | - | - | - | - |
| | Colorant | Carbon black | mass% | 2,5 | 2,5 | 2,5 | 2,5 | 2,5 |
| Resin beads | Extrusion temperature of melt-kneaded product | | °C | 274 | 274 | 275 | 280 | 282 |

(continued)

| | | | | Example 6 | Example 7 | Comparative Example 1 | Comparative Example 2 | Comparative Example 3 |
|---|---|---|---|---|---|---|---|---|
| Expanded beads | First-stage expanding condition | Sealed vessel volume | L | 5 | 5 | 5 | 5 | 5 |
| | | Water | L | 3 | 3 | 3 | 3 | 3,5 |
| | | Resin beads | g | 1000 | 1000 | 1000 | 1000 | 500 |
| | | Dispersant | g | 6 | 6 | 2 | 2 | 15 |
| | | Surfactant | g | 0,6 | 0,6 | 0,2 | 0,2 | 0,1 |
| | | Expanding temperature | °C | 135,4 | 135,5 | 135,5 | 135,3 | 135,5 |
| | | Equilibrium vapor pressure | MPa | 4 | 4 | 4 | 4 | 4 |
| | Physical properties of first-stage expanded beads | Bulk ratio M1 | × | 13,5 | 16,8 | 18 | 15,7 | 16,9 |
| | | Apparent density | $kg/m^3$ | 135,1 | 108,6 | 101,3 | 116,2 | 107,9 |
| | | Average cell diameter A | μm | 24 | 26 | 120 | 22 | 22 |
| | | Heat of fusion of high-temperature peak | J/g | 9,0 | 9,6 | 9,0 | 10,5 | 11 |
| | | Closed cell content | % | 74 | 72 | 91 | 40,6 | 73 |
| | Second-stage expanding condition | Pressurizing pressure | MPa | 0,6 | 0,6 | 0,6 | 0,6 | Non |
| | | Time up to pressurizing pressure | Day | 6 | 1 | 1 | 1 | |
| | | Steam pressure in second-stage expanding | MPa | 0,03 | 0,05 | 0,05 | 0,05 | |
| | Physical properties of (final) expanded beads | Bulk ratio M2 | × | 27,0 | 27,1 | 30 | 28,2 | 16,9 |
| | | M2/M1 | - | 1,7 | 1,6 | 1,7 | 1,8 | - |
| | | Apparent density | $kg/m^3$ | 60,8 | 67,3 | 60,8 | 64,7 | 107,9 |
| | | Average cell diameter A | μm | 24 | 23 | 150 | 32 | 22 |
| | | Closed cell content | % | 77 | 68 | 86 | 54 | 73 |
| | | Average cell diameter B | μm | 100 | 126 | 180 | 363 | 31 |
| | | B/A | - | 4,2 | 5,5 | 1,2 | 11,3 | 1,4 |
| | | B - A | μm | 76 | 103 | 30 | 331 | 9 |

(continued)

| | | | | Example 6 | Example 7 | Comparative Example 1 | Comparative Example 2 | Comparative Example 3 |
|---|---|---|---|---|---|---|---|---|
| Molded article of expanded beads | Molding condition | Internal pressure (set pressure) | MPa | 0,08 | 0,08 | 0,08 | 0,08 | 0,08 |
| | | Amount of cracking | % | 10 | 10 | 10 | 10 | 10 |
| | | Molding pressure | MPa(G) | 0,16 | 0,18 | 0,16 | - | 0,20 |
| | Physical properties | Density of molded article | $kg/m^3$ | 55,0 | 58,1 | 54,0 | - | 73,6 |
| | | Surface property | | ○ | ○ | ○ | Unmeasurable | ○ |
| | | Fusion-bonding ratio | | ○ | ○ | ○ | | ○ |
| | | Recoverability | | ○ | ○ | ○ | | ○ |
| | | Flame retardancy | | HF-1(4/5) | HF-1(4/5) | HBF(0/5) | - | HBF(0/5) |
| | | Evaluation of drip | | ○ | ○ | ○ | ○ | ○ |

[Table 3]

| | | | | Comparative Example 4 | Comparative Example 5 | Comparative Example 6 | Comparative Example 7 |
|---|---|---|---|---|---|---|---|
| Base material | Base material resin | Grade | | 5033B | 5033B | 5033B | 5033B |
| | | Amount of resin blended | parts by mass | 100 | 100 | 100 | 100 |
| | Flame retardant | Grade | | MC6000 | SR-T20000 | Hiromaster MA-80 | PHOSMEL |
| | | Amount of flame retardant blended (total) | parts by mass | 15 | 15 | 15 | 20 |
| | | Zinc borate | parts by mass | - | - | - | - |
| | | Flame retardant a + b | parts by mass | - | - | - | 20 |
| | | Ratio of a in flame retardant a+b | mass% | - | - | - | - |
| | | Ratio of b in flame retardant a + b | mass% | - | - | - | 100 |
| | Flame retardant auxiliary | Grade | | - | - | - | - |
| | | Amount of flame retardant auxiliary blended | parts by mass | - | - | - | - |
| | Colorant | Carbon black | mass% | 2,5 | 2,5 | 2,5 | 2,5 |
| Resin beads | Extrusion temperature of melt-kneaded product | | °C | 269 | 278 | 264 | 274 |

(continued)

| | | | | Comparative Example 4 | Comparative Example 5 | Comparative Example 6 | Comparative Example 7 |
|---|---|---|---|---|---|---|---|
| Expanded beads | First-stage expanding condition | Sealed vessel volume | L | 5 | 5 | 5 | 5 |
| | | Water | L | 3,5 | 3,5 | 3,3 | 3,9 |
| | | Resin beads | g | 500 | 500 | 700 | 100 |
| | | Dispersant | g | 2 | 2 | 4 | 3 |
| | | Surfactant | g | 0,2 | 0,2 | 0,4 | 0,2 |
| | | Expanding temperature | °C | 132,5 | 133 | 136 | 136 |
| | | Equilibrium vapor pressure | MPa | 4 | 4 | 4 | 4 |
| | Physical properties of first-stage expanded beads | Bulk ratio M1 | × | 15,1 | 16 | 14 | 5,9 |
| | | Apparent density | kg/$m^3$ | 120,8 | 115,2 | 126,7 | 309,2 |
| | | Average cell diameter A | μm | 40 | 95 | 13 | Not measured |
| | | Heat of fusion of high-temperature peak | J/g | 9,0 | 6,1 | 9,9 | 8,5 |
| | | Closed cell content | % | 92 | 93 | 94 | 0 |
| | Second-stage expanding condition | Pressurizing pressure | MPa | Non | Non | Non | Non |
| | | Time up to pressurizing pressure | Day | | | | |
| | | Steam pressure in second-stage expanding | MPa | | | | |
| | Physical properties of (final) expanded beads | Bulk ratio M2 | × | 15,1 | 16 | 14 | 5,9 |
| | | M2/M1 | - | - | - | - | - |
| | | Apparent density | kg/$m^3$ | 120,8 | 115,2 | 126,7 | 309,2 |
| | | Average cell diameter A | μm | 40 | 95 | 13 | 57 |
| | | Closed cell content | % | 92 | 93 | 94 | 0 |
| | | Average cell diameter B | μm | 56 | 356 | 76 | 420 |
| | | B/A | - | 1,4 | 3,7 | 5,9 | 7,4 |
| | | B - A | μm | 16 | 261 | 63 | 363 |

(continued)

| | | | | Comparative Example 4 | Comparative Example 5 | Comparative Example 6 | Comparative Example 7 |
|---|---|---|---|---|---|---|---|
| Molded article of expanded beads | Molding condition | Internal pressure (set pressure) | MPa | 0,08 | 0,08 | 0,08 | 0,08 |
| | | Amount of cracking | % | 10 | 10 | 10 | 10 |
| | | Molding pressure | MPa(G) | 0,16 | 0,16 | 0,16 | - |
| | Physical properties | Density of molded article | $kg/m^3$ | 75,2 | 76,5 | 96,6 | - |
| | | Surface property | | ○ | ○ | ○ | Unmeasurable |
| | | Fusion-bonding ratio | | ○ | ○ | ○ | |
| | | Recoverability | | ○ | ○ | ○ | |
| | | Flame retardancy | | HBF(0/5) | HBF(0/5) | HBF(0/5) | Not performed |
| | | Evaluation of drip | | ○ | × | ○ | - |

The present invention described above includes the following technical concepts.

(1) Polyamide-based resin expanded beads including a flame retardant and a polyamide-based resin, the flame retardant containing:

one or more flame retardants (flame retardant a) selected from the group consisting of metal salts of phosphinic acid, metal salts of diphosphinic acid, and mixtures of the metal salts of phosphinic acid and the metal salts of diphosphinic acid; and
one or more flame retardants (flame retardant b) selected from the group consisting of reaction products of melamine and polyphosphoric acid, reaction products of melamine condensation products and polyphosphoric acid, and mixtures of the reaction products of melamine and polyphosphoric acid and the reaction products of melamine condensation products and polyphosphoric acid,
the polyamide-based resin expanded beads including a base material resin containing a polyamide-based resin, wherein
a total of an amount of the flame retardant a blended and an amount of the flame retardant b blended is 10 parts by mass or more and 30 parts by mass or less with respect to 100 parts by mass of the base material resin containing the polyamide-based resin, a mass ratio of the amount of the flame retardant a blended to the amount of the flame retardant b blended is 90 : 10 to 30 : 70 (wherein a total of the flame retardant a and the flame retardant b is 100 mass%),
an average cell diameter A of the polyamide-based resin expanded beads is 5 μm or more and 100 μm or less, and an average cell diameter B of 5 cells is 250 μm or less, the 5 cells selected from cells observed in a cut surface formed by bisecting the polyamide-based resin expanded beads, in descending order of an area per cell.

(2) The polyamide-based resin expanded beads according to (1) above, wherein the average cell diameter B is 160 μm or less.
(3) The polyamide-based resin expanded beads according to (1) or (2) above, wherein a difference between the average cell diameter A and the average cell diameter B [B - A] is 60 μm or more and 200 μm or less.
(4) The polyamide-based resin expanded beads according to any one of (1) to (3) above, wherein the flame retardant a is aluminum hypophosphite, and
the flame retardant b is melamine polyphosphate.
(5) The polyamide-based resin expanded beads according to any one of (1) to (4) above, wherein the flame retardant a is aluminum hypophosphite,

the flame retardant b is melamine polyphosphate, and

a content of phosphorus is 15 mass% or more and 30 mass% or less and a content of nitrogen is 10 mass% or more and 20 mass% or less in 100 mass% of the melamine polyphosphate.

(6) The polyamide-based resin expanded beads according to any one of (1) to (5) above, wherein the amount of the flame retardant b blended is 2 parts by mass or more and 10 parts by mass or less with respect to 100 parts by mass of the base material resin containing the polyamide-based resin.
(7) The polyamide-based resin expanded beads according to any one of (1) to (6) above, including a carbon-based colorant, wherein an amount of the carbon-based colorant blended is 0.5 mass% or more and 5 mass% or less in 100 mass% of the polyamide-based resin expanded beads.
(8) The polyamide-based resin expanded beads according to any one of (1) to (7) above, further including an NOR type hindered amine having a partial structure represented by Formula (IV) described below:

[Chemical Formula 5]

(IV)

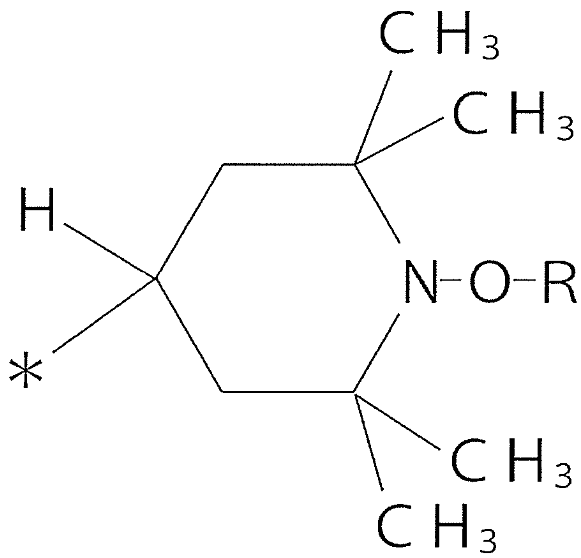

wherein R represents an alkyl group, a cycloalkyl group, an aralkyl group, or an aryl group, and * represents a bond with a freely selected structure
wherein an amount of the NOR type hindered amine blended is 0.5 parts by mass or more and 8 parts by mass or less with respect to 100 parts by mass of a total of an amount of the flame retardant a and an amount of the flame retardant b.

(9) The polyamide-based resin expanded beads according to any one of (1) to (8) above, having an apparent density of 10 kg/$m^3$ or more and 80 kg/$m^3$ or less.
(10) The polyamide-based resin expanded beads according to any one of (1) to (9) above, further including zinc borate, wherein an amount of the zinc borate blended is 0.5 parts by mass or more and 10 parts by mass or less with respect to 100 parts by mass of the base material resin.
(11) A molded article of polyamide-based resin expanded beads, obtained by in-mold molding of the polyamide-based resin expanded beads according to any one of (1) to (10) above.
(12) A method of producing polyamide-based resin expanded beads, the method including:

a resin bead preparation step of melt-kneading a base material including a flame retardant and a polyamide-based resin to prepare a melt-kneaded product, and extruding the melt-kneaded product from an extruder to prepare polyamide-based resin beads; and
an expanding step of expanding the polyamide-based resin beads to produce polyamide-based resin expanded beads,
the flame retardant containing:

one or more flame retardants (flame retardant a) selected from the group consisting of metal salts of

phosphinic acid, metal salts of diphosphinic acid, and mixtures of the metal salts of phosphinic acid and the metal salts of diphosphinic acid; and

one or more flame retardants (flame retardant b) selected from the group consisting of reaction products of melamine and polyphosphoric acid, reaction products of melamine condensation products and polyphosphoric acid, and mixtures of the reaction products of melamine and polyphosphoric acid and the reaction products of melamine condensation products and polyphosphoric acid, wherein

a total of an amount of the flame retardant a blended and an amount of the flame retardant b blended is 10 parts by mass or more and 30 parts by mass or less with respect to 100 parts by mass of the base material resin containing the polyamide-based resin, and a mass ratio of the amount of the flame retardant a blended to the amount of the flame retardant b blended is 90 : 10 to 30 : 70 (wherein a total of the flame retardant a and the flame retardant b is 100 mass%).

(13) The method of producing polyamide-based resin expanded beads according to (12) above, including performing at least one of Configurations 1 to 6 described below:

Configuration 1 in which to the base material, zinc borate is added in an amount within a range of 0.5 parts by mass or more and 10 parts by mass or less with respect to 100 parts by mass of the base material resin;

Configuration 2 in which in the resin bead preparation step, a temperature of the melt-kneaded product extruded from the extruder is adjusted to 250°C or higher and 275°C or lower;

Configuration 3 in which a twin-screw extruder is used as the extruder in the resin bead preparation step;

Configuration 4 in which

the expanding step includes at least a first-stage expanding step of dispersing the polyamide-based resin beads, an inorganic dispersant, and a surfactant in a sealed vessel supplied with a dispersion medium and impregnating the polyamide-based resin beads with a blowing agent to prepare expandable polyamide-based resin beads and then opening one end of the sealed vessel to release the expandable polyamide-based resin beads together with the dispersion medium to a pressure lower than a pressure in the sealed vessel and thus expand the expandable polyamide-based resin beads,

an amount of the inorganic dispersant added in the dispersion medium is 0.3 parts by mass or more and 2.0 parts by mass or less with respect to 100 parts by mass of the polyamide-based resin beads, and an amount of the surfactant added in the dispersion medium is 0.2 parts by mass or more and 1.5 parts by mass or less with respect to 100 parts by mass of the polyamide-based resin beads;

Configuration 5 in which to the base material, an NOR type hindered amine having a partial structure represented by Formula (IV) is added in an amount within a range of 0.5 parts by mass or more and 8 parts by mass or less with respect to 100 parts by mass of a total of the flame retardant a and the flame retardant b, and R represents an alkyl group, a cycloalkyl group, an aralkyl group, or an aryl group, and * represents a bond with a freely selected structure in Formula (IV)

[Chemical Formula 6]

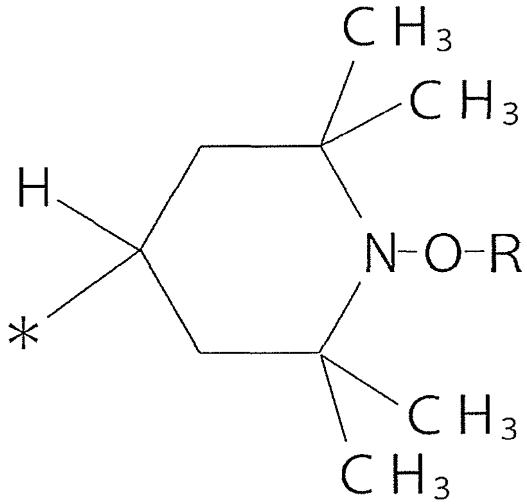

(IV)

Configuration 6 in which the expanding step includes:

a first-stage expanding step of dispersing the polyamide-based resin beads in a sealed vessel supplied with a dispersion medium and impregnating the polyamide-based resin beads with a blowing agent to prepare expandable polyamide-based resin beads and then opening one end of the sealed vessel to release the expandable polyamide-based resin beads together with the dispersion medium to a pressure lower than a pressure in the sealed vessel and thus expand the expandable polyamide-based resin beads; and
a second-stage expanding step of supplying first-stage expanded beads obtained in the first-stage expanding step to a pressure-resistant vessel, and expanding the first-stage expanded beads by applying an internal pressure and heating the first-stage expanded beads to obtain polyamide-based resin expanded beads exhibiting a bulk ratio M2 larger than a bulk ratio M1 of the first-stage expanded beads.

(14) The method of producing polyamide-based resin expanded beads according to (13) above, wherein in Configuration 6 above, a ratio of the bulk ratio M2 of the polyamide-based resin expanded beads obtained in the second-stage expanding step to the bulk ratio M1 of the first-stage expanded beads obtained in the first-stage expanding step (M2/M1) is 1.2 or more and 2.0 or less.
(15) The method of producing polyamide-based resin expanded beads according to (13) or (14) above, wherein in the second-stage expanding step in Configuration 6 above, an internal pressure (pressurizing pressure) in the first-stage expanded beads is adjusted to a range of 0.3 MPa or more and 1.0 MPa or less and then the internal pressure is held for at least 24 hours to apply the internal pressure to the first-stage expanded beads.
(16) The method of producing polyamide-based resin expanded beads according to any one of (13) to (15) above, wherein the first-stage expanded beads to which the internal pressure is applied in the second-stage expanding step in Configuration 6 are heated with steam at 0.01 MPa or more and 0.08 MPa or less.
(17) The method of producing polyamide-based resin expanded beads according to any one of (12) to (16) above, wherein an average cell diameter A of the polyamide-based resin expanded beads is 5 μm or more and 100 μm or less, and an average cell diameter B of 5 cells is 250 μm or less, the 5 cells selected from cells observed in a cut surface formed by bisecting the polyamide-based resin expanded beads, in descending order of an area per cell.

**Claims**

**1.** Polyamide-based resin expanded beads comprising a flame retardant, the flame retardant containing:

one or more flame retardants (flame retardant a) selected from the group consisting of metal salts of phosphinic

acid, metal salts of diphosphinic acid, and mixtures of the metal salts of phosphinic acid and the metal salts of diphosphinic acid; and
one or more flame retardants (flame retardant b) selected from the group consisting of reaction products of melamine and polyphosphoric acid, reaction products of melamine condensation products and polyphosphoric acid, and mixtures of the reaction products of melamine and polyphosphoric acid and the reaction products of melamine condensation products and polyphosphoric acid,
the polyamide-based resin expanded beads comprising a base material resin containing a polyamide-based resin, wherein
a total of an amount of the flame retardant a blended and an amount of the flame retardant b blended is 10 parts by mass or more and 30 parts by mass or less with respect to 100 parts by mass of the base material resin, a mass ratio of the amount of the flame retardant a blended to the amount of the flame retardant b blended is 90 : 10 to 30 : 70 (wherein a total of the flame retardant a and the flame retardant b is 100 mass%),
an average cell diameter A of the polyamide-based resin expanded beads is 5 μm or more and 100 μm or less, and an average cell diameter B of 5 cells is 250 μm or less, the 5 cells selected from cells observed in a cut surface formed by bisecting the polyamide-based resin expanded beads, in descending order of an area per cell.

2. The polyamide-based resin expanded beads according to claim 1, wherein a difference between the average cell diameter A and the average cell diameter B [B - A] is 60 μm or more and 200 μm or less.

3. The polyamide-based resin expanded beads according to claim 1 or 2, wherein the average cell diameter B is 160 μm or less.

4. The polyamide-based resin expanded beads according to any one of claims 1 to 3, wherein the flame retardant a is an aluminum salt of phosphinic acid, and
the flame retardant b is melamine polyphosphate.

5. The polyamide-based resin expanded beads according to any one of claims 1 to 4, wherein the amount of the flame retardant b blended is 2 parts by mass or more and 10 parts by mass or less with respect to 100 parts by mass of the base material resin.

6. The polyamide-based resin expanded beads according to any one of claims 1 to 5, comprising a carbon-based colorant, wherein an amount of the carbon-based colorant blended is 0.5 mass% or more and 5 mass% or less in 100 mass% of the polyamide-based resin expanded beads.

7. The polyamide-based resin expanded beads according to any one of claims 1 to 6, further comprising an NOR type hindered amine having a partial structure represented by Formula (IV) described below:

[Chemical Formula 1]

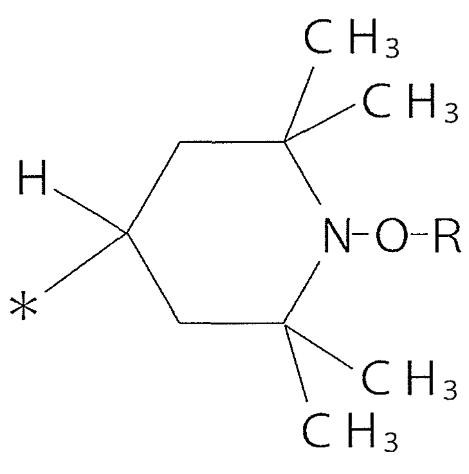

(IV)

wherein R represents an alkyl group, a cycloalkyl group, an aralkyl group, or an aryl group, and * represents a bond with a freely selected structure
wherein an amount of the NOR type hindered amine blended is 0.5 parts by mass or more and 8 parts by mass or less with respect to 100 parts by mass of a total of an amount of the flame retardant a and an amount of the flame retardant b.

**8.** The polyamide-based resin expanded beads according to any one of claims 1 to 7, having an apparent density of 10 $kg/m^3$ or more and 80 $kg/m^3$ or less.

**9.** A molded article of polyamide-based resin expanded beads, obtained by in-mold molding of the polyamide-based resin expanded beads according to any one of claims 1 to 8.

【Fig.1】

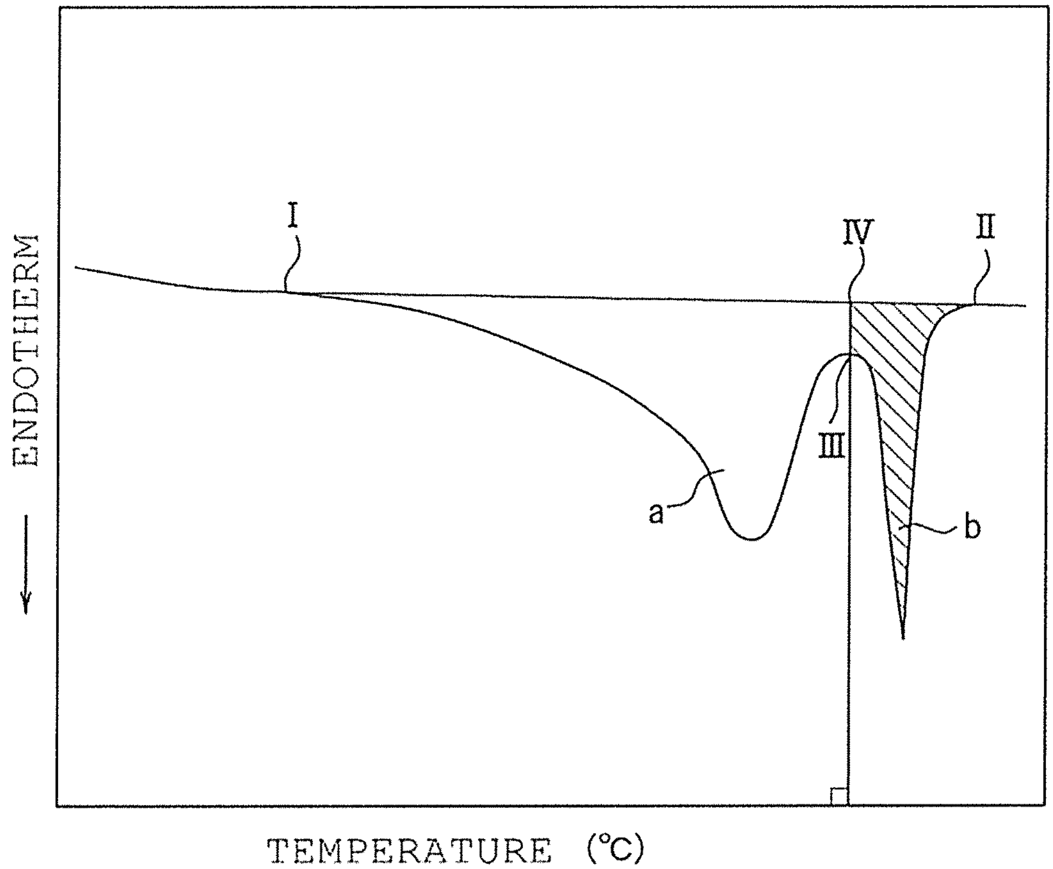

**INTERNATIONAL SEARCH REPORT**

International application No.
**PCT/JP2024/002833**

**A. CLASSIFICATION OF SUBJECT MATTER**

***C08J 9/16***(2006.01)i
FI: C08J9/16 CFG

According to International Patent Classification (IPC) or to both national classification and IPC

**B. FIELDS SEARCHED**

Minimum documentation searched (classification system followed by classification symbols)

C08J9/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2011/0294910 A1 (KRIHA, Olaf) 01 December 2011 (2011-12-01) claims, examples | 1-9 |
| A | WO 2020/196893 A1 (ASAHI KASEI KABUSHIKI KAISHA) 01 October 2020 (2020-10-01) claims, paragraph [0048], examples | 1-9 |
| A | WO 2022/085538 A1 (JSP CORPORATION) 28 April 2022 (2022-04-28) claims, examples | 1-9 |
| A | WO 2022/039076 A1 (KANEKA CORP.) 24 February 2022 (2022-02-24) claims, examples | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/002833**

| Patent document cited in search report | Publication date (day/month/year) | Patent family member(s) | Publication date (day/month/year) |
|---|---|---|---|
| US 2011/0294910 A1 | 01 December 2011 | (Family: none) | |
| WO 2020/196893 A1 | 01 October 2020 | US 2022/0169849 A1<br>claims, paragraphs [0115], [0116], examples<br>EP 3950794 A1<br>CN 113614158 A | |
| WO 2022/085538 A1 | 28 April 2022 | JP 2022-68821 A<br>US 2023/0407035 A1<br>claims, examples<br>EP 4234615 A1<br>CN 116490547 A | |
| WO 2022/039076 A1 | 24 February 2022 | EP 4201989 A1<br>claims, examples<br>CN 114075354 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016001109 A